# EUROPEAN PATENT SPECIFICATION

(11) **EP 1 720 918 B1**
(45) Date of publication and mention of the grant of the patent: **22.12.2010**
(21) Application number: 05710865.6
(22) Date of filing: 23.02.2005
(51) Int. Cl.: C08F 220/00, G02B 5/00, C09J 133/00, G03F 7/00

(54) **ADHESIVE FILM FUNCTIONALIZING COLOR COMPENSATION AND NEAR INFRARED RAY (NIR) BLOCKING AND PLASMA DISPLAY PANEL FILTER USING THE SAME**
FARBKOMPENSATION UND BLOCKIERUNG VON NAHINFRAROTSTRAHLEN (NIR) FUNKTIONALISIERENDER KLEBSTOFFFILM UND PLASMA-DISPLAY-PANEL-FILTER DAMIT
FILM ADHESIF A CORRECTION DES COULEURS ET ARRETANT LE PROCHE INFRAROUGE, ET FILTRE D'ECRAN PLASMA UTILISANT CE FILM

(30) Priority: 23.02.2004 KR 2004011798; 23.02.2005 KR 2005014754
(43) Date of publication of application: 15.11.2006
(73) Proprietor: LG Chem, Ltd., 150-010 Seoul (KR)
(72) Inventor: Choi, Hyun-Seok, Daejeon-city 305-340 (KR); Park, Sang-Hyun, Yuseong-gu, Daejeon-city 305-330 (KR); Lee, Yeon-Keun, Daejeon-city 302-777 (KR); Hwang, In-Seok, Daejeon-city 305-340 (KR); Kim, Jung-Doo, Yuseong-gu, Daejeon-city 305-390 (KR); Cho, Hyun-Ju, Gyeongsangnam-do 621-906 (KR); Lee, Dong-Wook, Daejeon-city 305-728 (KR)
(74) Representative: HOFFMANN EITLE
(86) International application number: PCT/KR2005/000505
(87) International publication number: WO 2005/080453

(56) References cited:
- EP-A1- 1 090 910
- EP-A1- 1 241 489
- EP-A2- 1 111 410
- WO-A1-03/005076
- JP-A- 2000 250 420
- JP-A- 2001 207 142
- US-A1- 2002 127 395
- US-B1- 6 307 671

## Description

### CROSS-REFERENCE TO RELATED APPLICATION

This application claims priority of Korean Patent Application Nos. 10-2004-0011798 filed on February 23, 2004 and 10-2005-0014754 filed on February 23, 2005 in the Korean Intellectual Property Office, the entire disclosure of which are incorporated herein by reference.

### BACKGROUND OF THE INVENTION

### (a) Field of the Invention

The present invention relates to an adhesive film functionalizing such color compensation as neon-cut as well as near infrared ray blocking and a plasma display filter comprising the same, and more particularly to an adhesive film having superior durability, thermal stability, and adhesivity because of little transmittance change at high temperature and humidity and a plasma display filter using the same.

### (b) Description of the Related Art

Recently, the plasma display panel (PDP) has been recognized as the primary flat display panel offering a wide screen.

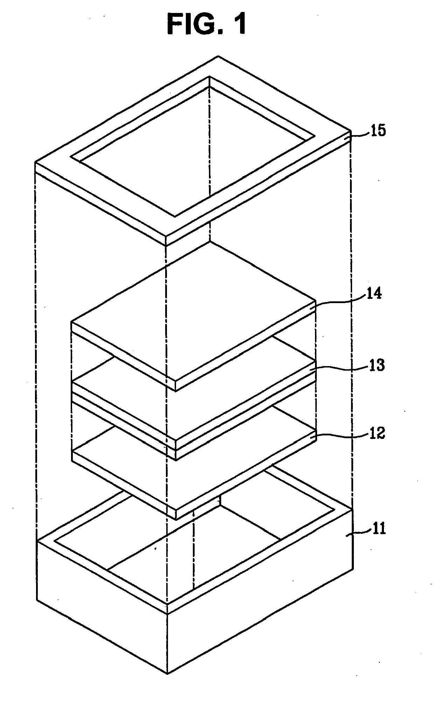

Thus far, a plasma display panel offering a screen as wide as about 70 inches has been developed. For reference, FIG. 1 is a schematic diagram showing the general structure of a plasma display panel. In FIG. 1, numeral 11 indicates a case, numeral 12 indicates a driving circuit board, numeral 13 indicates a panel assembly, numeral 14 indicates a PDP filter, and numeral 15 indicates a cover.

The PDP filter compensates for purity lowering of the red spectrum caused by the unique orange spectrum emitted from the panel, and blocks near infrared rays that cause malfunctions of the remote controller and electromagnetic radiation that is harmful to the human body. In order to accomplish such tasks, the PDP filter comprises such functional layers as an anti-reflection layer, a color compensation layer compensating for color purity, a near infrared absorbing layer, an electromagnetic radiation shielding layer, etc. In general, these functional layers are made of common films and are stacked using an adhesive therebetween.

If a sheet of film has both the color compensation and the near infrared ray blocking functions or if the number of films can be reduced, quality problems related with stacking can be reduced and consumption of materials can be curtailed. For example, if a film is endowed with three functions by forming two functional layers on each side of the film, the number of layers of a PDP filter can be reduced by half. Alternately, the structure may be simplified by using an adhesive capable of exerting such functions. Typically, dyes are used for near infrared ray blocking and color compensation. Examples of such dyes are a neon-cut dye and a near infrared ray blocking dye, which absorb light in the specific wavelength region. In general, a layer comprising a mixture of a binder polymer is coated on a transparent substrate. In this case, the substrate on which the dye layer has been coated should be inserted into the PDP filter using an adhesive.

Adhesives commonly used for this purpose are rubbers, poly(vinyl ether)s, acryls, silicones, etc. However, the rubber adhesives have poor aging resistance, the poly(vinyl ether) adhesives have poor heat resistance, and the silicone adhesives have a disadvantage in adhesivity. On the other hand, acryl-based adhesives are widely used in preparing adhesive compositions because of superior melting properties, and they generally offer superior adhesivity when a light pressure is applied thereto at room temperature because the polymer molecules comprising the adhesive are fluid and sensitive to pressure. But this fluidity tends to lower heat resistance or moisture resistance of the dye included in the adhesive to improve color compensation or near infrared ray blocking performance. Therefore, it is important to select a durable dye capable of enduring high temperature and high humidity.

The prior arts using the color compensation dye and the near infrared ray dye are as follows.

Japan Patent Publication No. 2001-248721 discloses an optical filter employing an azaporphyrin dye in the 570-605 nm region. Although this patent mentions that a transparent adhesive (acryl-based adhesive) may be included to improve adhesivity, the adhesive structure used, the crosslinking agent, and the coupling agent are not mentioned in detail. In addition, although an initial transmittance of 15.9% at 584 nm is sated, there is no mention of transmittance maintenance regarding before and after durability test.

Korea Patent Publication No. 2002-0055410 discloses a near infrared ray blocking material prepared by applying a cyanine dye and a near infrared ray dye absorbing in the 550-620 nm region on a transparent substrate. Korea Patent Publication No. 2004-0049280 discloses a pressure-sensitive adhesive composition comprising an acryl adhesive resin, a near infrared ray dye, a UV absorbent, and a hindered amine light stabilizer. Japan Patent Publication No. 2001-207142 discloses an IR-absorbing adhesive composition comprising an acryl adhesive resin, a cyanine IR absorbent, and a polyfunctional acryl copolymer, while Japan Patent Publication No. 2004-107566 discloses an adhesive comprising an acryl resin having a specific acid value and a polymethine neon-cut dye.

However, Korea Patent Publication No. 2002-0055410 makes no mention of an adhesive structure and composition, and Korea Patent Publication No. 2004-0049280 does not suggest near infrared blocking efficiency regarding a near infrared ray absorption film. And Japan Patent Publication No. 2001-207142 does not suggest a cyanine-based NIR dye and a cyanine-based neon-cut dye, but weak heat-resistance and light-resistance occur when cyanine dye alone is used.

Also, the color compensation films and the near infrared ray blocking films prepared according to the conventional methods show difference in durability at high temperature and humidity depending on the kind of binder, coating condition, etc. In addition, it is costly and ineffective to stack these films to manufacture a PDP filter. Thus, there have been attempts to develop multifunctional adhesive layers, such as an adhesive layer including a neon-cut layer and an adhesive layer including a near infrared ray blocking layer, but durability at high temperature and humidity has been shown to be unsatisfactory.

EP-A2-1111410 concerns an infrared absorption filter having an infrared absorption layer comprising an infrared absorption coloring matter absorbing in the near-infrared region and a polymer resin. An additional polymer adhesion layer is used to ensure adhesion of the filter layer to other layers, said adhesion layer optionally consisting of an acrylic resin.

US-B1-6307671 describes an optical filter for plasma and other types of display panels employing a dye layer for color correction absorbing in the range of 560-620 nm and including an optional near-infrared absorber, antireflection (column 72, lines 12 ff.) and electromagnetic wave shielding layers.

EP-A1-1241489 describes a transparent substrate coated with a transparent resin film containing at least a near infrared absorbing-dye and a transparent resin adhesive layer containing at least a dye having a maximum absorption wavelength at 550 to 620 nm which is to be used as a filter for display devices such as a plasma display.

WO 03005076 A1 concerns a diimmonium salt compound and its use in a near-infrared absorbing filter. It describes a method for producing the near-infrared absorbing filter in which an adhesive agent is mixed into the near-infrared absorbing compound to fabricate a ply resin sheet, a ply resin film or ply glass sheet.

EP-A1-1090910 concerns aminium and diimmonium salt compounds and their use, among others, in infrared ray screening filters. The compound compounds may be mixed into an adhesive to produce a laminated resin plate, a laminated resin film or a laminated glass plate.

JP 2001 207142 A concerns an infrared-absorbing adhesive composition and infrared-adsorbing sheet using the same. The composition is said to be suitable for use in the front panel of a plasma display panel and to comprise an acrylic adhesive resin as well as an infrared absorber contained therein.

### SUMMARY OF THE INVENTION

It is an aspect of the present invention to provide a multifunctional adhesive film functionalizing color compensation and near infrared ray blocking, having superior durability with little transmittance change at high temperature and humidity, having superior thermal stability, being capable of maintaining transmittance in the visible region for an extended time, and having good near infrared ray blocking performance.

It is another aspect of the present invention to provide a plasma display panel filter comprising a multifunctional adhesive film having color compensation and near infrared ray blocking performance without an additional adhesive layer and thus being capable of simplifying the film, and a plasma display panel comprising the same.

To attain these aspects, the present invention provides a multifunctional adhesive film for a plasma display panel comprising an acryl-based adhesive, and a near infrared ray blocking dye in the same layer, with the acryl-based adhesive functioning as a binder resin.

The present invention also provides a multifunctional adhesive film for a plasma display panel comprising an acryl adhesive and a neon-cut dye in the same layer, with the acryl-based adhesive functioning as a binder resin. Preferably, the adhesive film further comprises a near infrared ray blocking dye.

The present invention further provides a plasma display panel filter comprising at least one of the above-mentioned multifunctional adhesive films on at least one side of a substrate.

The present invention further provides a plasma display panel comprising the plasma display panel filter.

### BRIEF DESCRIPTION OF THE DRAWINGS

FIG. 1 is a schematic diagram showing the structure of a plasma display panel.
FIG. 2 shows a spectrum change of a multifunctional adhesive film prepared in Example 4 according to the present invention.
FIG. 3 shows the spectrum change of a multifunctional adhesive film prepared in Example 5 according to the present invention.
FIG. 4 shows the spectrum change of a multifunctional adhesive film prepared In Example 6 according to the present invention.
FIG. 5 shows the spectrum change of an adhesive film prepared in Comparative Example 1 after a high temperature durability test.
FIG. 6 shows the spectrum change of the adhesive film prepared in Comparative Example 1 after a high temperature/ high humidity test.
FIG. 7 shows the spectrum change of the adhesive film prepared in Comparative Example 2.
FIG. 8 shows the structure of the plasma display filter of Example 7 comprising the multifunctional adhesive according to the present invention.
FIG. 9 shows the structure of the plasma display filter of Example 8 comprising the multifunctional adhesive according to the present invention.
FIG. 10 shows the structure of the plasma display filter of Comparative Example 3.

### DETAILED DESCRIPTION OF THE PREFERRED EMBODIMENTS

Hereunder is given a detailed description of the present invention.

The present invention provides a multifunctional adhesive film for a plasma display panel having good durability and adhesivity, which comprises a pressure-sensitive acryl-based adhesive having superior adhesivity and durability and being capable of replacing the conventional adhesive (PSA) as a binder resin as well as color compensation dye and/or a near infrared ray dye in the same layer, with the acryl-based adhesive functioning as a binder resin.

The film of the present invention comprises a neon-cut dye capable of blocking neon light around 590 nm and/or a near infrared ray dye capable of blocking near infrared rays around 850 nm and 950 nm in order to satisfy typical optical characteristics required for a plasma display filter.

The multifunctional adhesive film of the present invention effectively reduces the neon peak around 570-600 nm, which is generated from the PDP module and/or blocks light in the NIR region of 800-1100 nm to 10 % or below. When tested at high temperature and humidity, more specifically at 80 °C for 500 hours and at 60 °C and 90% RH for 500 hours, the concentration of the dye in the visible and NIR region changes by 10 % or less. Because a sheet of film can have the color compensation or both the color compensation and the near infrared ray blocking performances, the number of films can be reduced to simplify the structure.

Hereunder is given a more detailed description of the adhesive film of the present invention.

A PDP has a film (filter) exerting several functions in front of the panel in order to block electromagnetic radiation, neon radiation, near infrared rays, etc. generated during operation. An adhesive (PSA) is used to form the film. This adhesive should have not only superior adhesivity but also excellent transmittance in the visible region (380-780 nm).

Accordingly, the film of the present invention comprises an acryl-based adhesive and a near infrared ray blocking dye and/or a neon-cut dye in the same layer, with the acryl-based adhesive functioning as a binder resin.

Preferably, the adhesive used as a binder resin in the present invention is an acryl-based adhesive having a glass transition temperature (T_{g}) of 0 °C or below. The acryl-based adhesive may be obtained from copolymerization of 75-99.89 wt% of a (meth)acrylate ester monomer having a C₁₋₁₂ alkyl group, 0.1-20 wt% of an α,β-unsaturated carboxylate monomer, which is a functional monomer, and 0.01-5 wt% of a polymeric monomer having a hydroxyl group. The copolymerization may be performed by one skilled in the art.

More preferably, the acryl-based adhesive is a butyl acrylate (BA)/hydroxyethyl methacrylate (HEMA) copolymer or a butyl acrylate/acrylic acid (AA) copolymer, because these have superior absorption ability compared with an acryl adhesive in the prior art at the visible region and a near infrared ray region.

The near infrared ray blocking dye may be one that is commonly used, for example a diimmonium dye. If required, it may be used along with a metal-complex dye or a phthalocyanine dye. The diimmonium dye absorbs near infrared rays in the broad region of 900-1200 nm.

The near infrared ray blocking dye may be at least one selected from the group consisting of a diimmonium dye represented by Chemical Formula 4 below (when used in combination with a neon-cut dye) a phthalocyanine dye represented by Chemical Formula 5 below, a naphthalocyanine dye represented by Chemical Formula 6 below, and a metal-complex dye represented by Chemical Formula 7 and Chemical Formula 8 below.

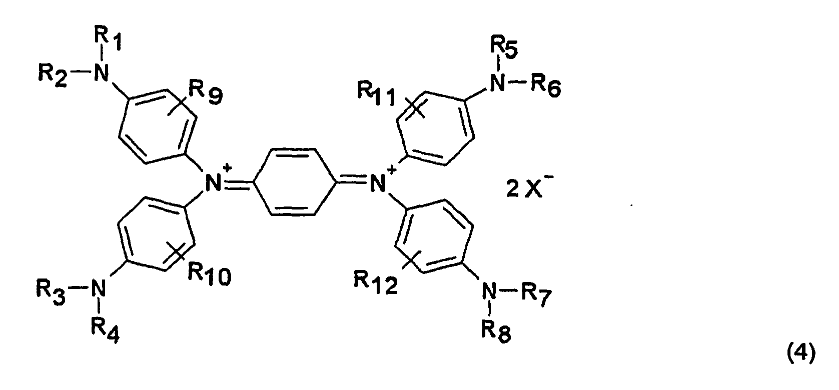

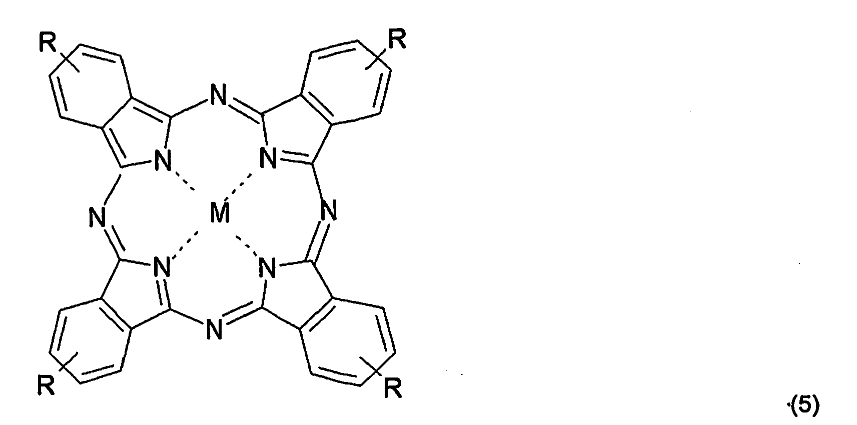

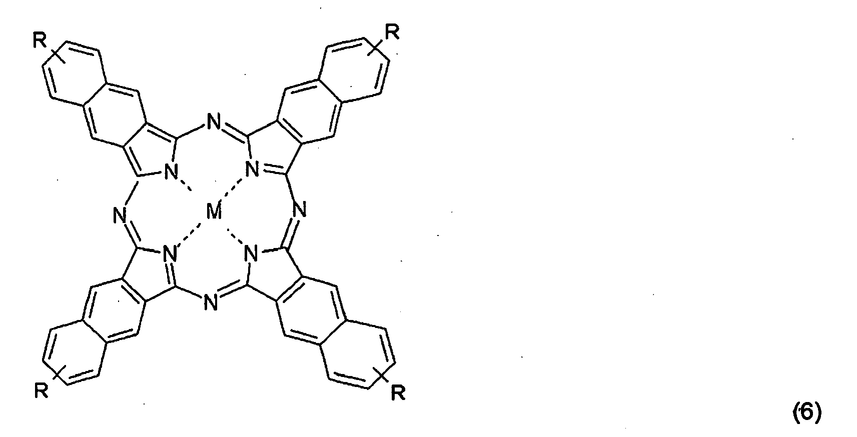

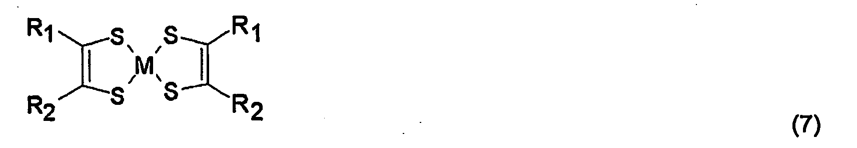

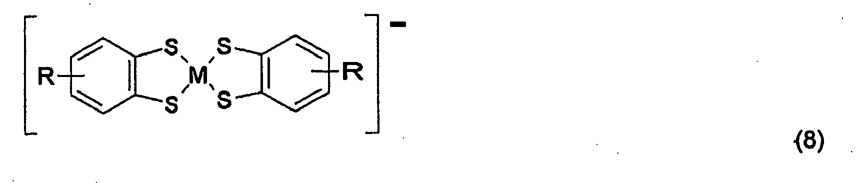

In Chemical Formula 4, each of R₁-R₁₂ is, independently, a hydrogen atom, a halogen atom, a substituted or unsubstituted alkyl group with C₁-C₁₆, or a substituted or unsubstituted aryl group with C₁-C₁₆; and X is a monovalent or divalent organic anion, a monovalent anion, or a divalent inorganic anion.

In Chemical Formulas 5 and 6, each of R is, independently, a hydrogen atom, a halogen atom, a substituted or unsubstituted alkyl group with C₁-C₁₆, a substituted or unsubstituted phenyl group, a substituted or unsubstituted alkoxy group having C₁-C₅, a substituted or unsubstituted allyloxy group, a fluorine-substituted alkoxy group, or a pentagonal ring having at least one substituted or unsubstituted nitrogen atom; and M is at least one selected from the group consisting of the two hydrogen atoms, a divalent metal atom, a trivalent or tetravalent substituted metal atom, and an oxy-metal atom, and is preferably Ni, Pt, Pd, or Cu.

In Chemical Formulas 7 and 8, each of R and R₁-R₄ is, independently, a hydrogen atom, an alkyl group having C₁-C₁₆, an aryl group, an alkoxy group, a phenoxy group, a hydroxy group, an alkylamino group having C₁-C₁₆, an arylamino group, a trifluoromethyl group, an alkylthio group having C₁-C₁₆, an arylthio group, a nitro group, a cyano group, a halogen atom, a phenyl group, or a naphthyl group.

In Chemical Formula 4, the monovalent organic anion may be an organic carboxylate ion, an organic sulfonate ion, an organic borate ion, etc. The organic carboxylate ion may be acetate, lactate, trifluoroacetate, propionate, benzoate, oxalate, succinate, or stearate. The organic sulfonate ion may be a metal sulfonate, toluenesulfonate, naphthalenemonosulfonate, chlorobenzenesulfonate, nitrobenzenesulfonate, dodecylbenzenesulfonate, benzonesulfonate, ethanesulfonate, or trifluoromethanesulfonate. Preferably, the organic borate ion is tetraphenylborate or butyltriphenylborate.

In Chemical Formula 4, the monovalent inorganic anion is preferably a halogenate anion, such as fluoride, chloride, bromide, iodide, thiocyanate, hexafluoroantimonate, perchlorate, periodate, nitrate, tetrafluoroborate, hexafluorophosphate, molybdate, tungstate, titanate, vanadate, phosphate, and borate. Preferably, the divalent inorganic anion is naphthalene-1,5-disulfonate, naphthalene-1,6-disulfonate, a naphthalene disulfonate derivative, etc.

The neon-cut dye has a maximum absorption wavelength of 570-600 nm and a half bandwidth of 50 nm or below. Preferably, it has the structure of an intramolecular or intermolecular metal-complex.

For example, the neon-cut dye may be at least one selected from the group consisting of a porphyrin dye having an intramolecular metal-complex, as represented by Chemical Formula 1 below, and a cyanine dye having an intermolecular metal-complex structure, as represented by Chemical Formulas 2 and 3 below. Preferably, the neon-cut dye may be porphyrin dye.

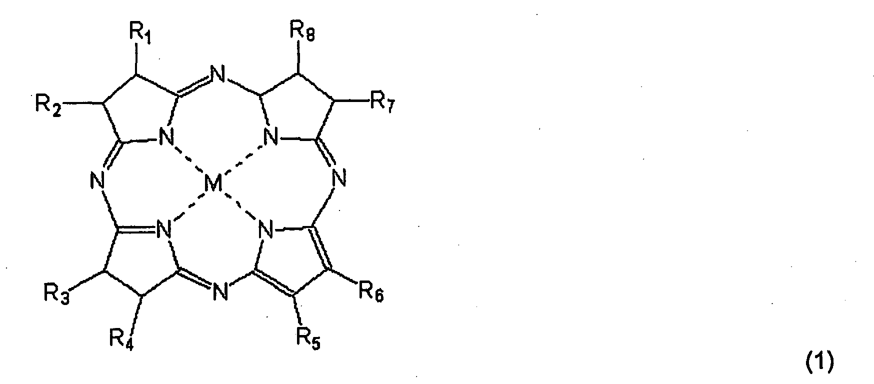

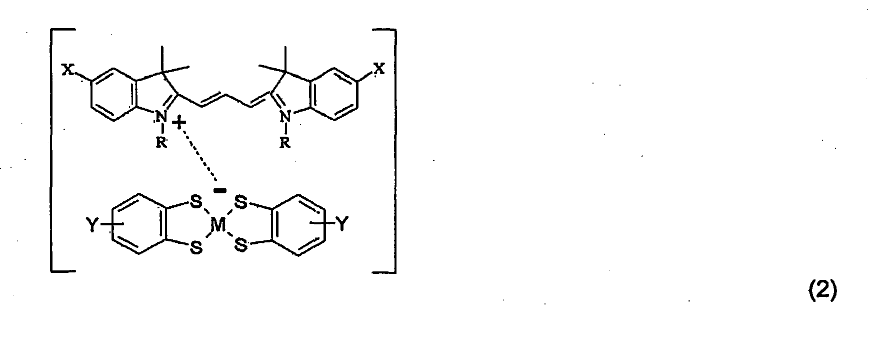

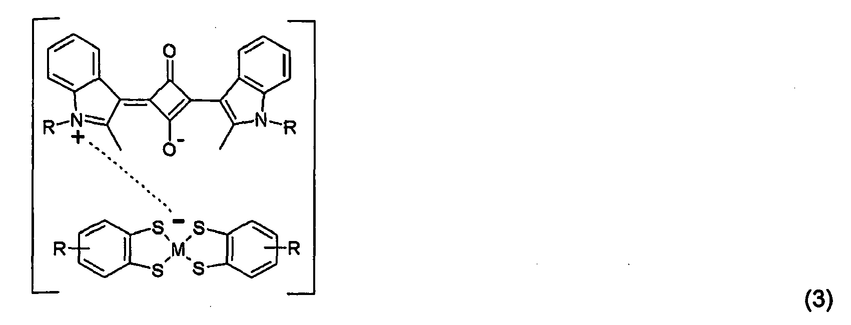

In Chemical Formula 1, each of R₁-R₈ is, independently, a hydrogen atom, a halogen atom, a substituted or unsubstituted alkyl group having C₁-C₁₆ or an alkoxy group having C₁-C₁₆, a substituted or unsubstituted phenyl group, a substituted or unsubstituted allyloxy group, a fluorine-substituted alkoxy group, or a pentagonal ring having at least one substituted or unsubstituted nitrogen atom; and M is a hydrogen atom, an oxygen atom, a halogen atom, or a coordinated divalent to tetravalent metal atom.

In Chemical Formulas 2 and 3, each of R is, independently, a hydrogen atom, a substituted or unsubstituted aliphatic hydrocarbon having 1-30 carbon atoms, an alkoxy group having 1-8 carbon atoms, or an aryl group having 6-30 carbon atoms; each of X and Y is, independently, a halogen atom, a nitro group, a carboxyl group, an alkoxy group having 2-8 carbon atoms, a phenoxycarbonyl group, a carboxylate group, an alkyl group having 1-8 carbon atoms, an alkoxy group having 1-8 carbon atoms, or an aryl group having 6-30 carbon atoms.

In M of Chemical Formula 1, the divalent metal atom may be Cu, Zn, Fe, Co, Ni, Ru, Rd, Pd, Mn, Sn, Mg, Ti, etc; the trivalent metal atom may be substituted by a halogen atom, a hydroxy group, or an alkoxy group such as Al-Cl, Ga-Cl, In-Cl, Fe-Cl, Ru-Cl, etc; and the quadravalent atom may be substituted by two substituents selected from a halogen atom, a hydroxy group, and an alkoxy group such as SiCl₂, GaCl₂, TiCl₂, SnCl₂, Si(OH)₂, Ge(OH)₂, Mn(OH)₂, Sn(OH)₂, etc. Also, M may be an oxymetal binding with oxygen such as VO, MnO, TiO, etc.

The proportion of the acryl-based adhesive to the near infrared ray blocking dye by weight is 10:1 to 10,000:1. The weight proportion varies with the weight portion of solvent in the adhesive solution, viscosity of the adhesive solution, molar extinction coefficient of the near infrared ray blocking dye, and wanted transmittance value.

For a film comprising a neon-cut dye, the weight proportion of the acryl adhesive to the neon-cut dye is 10:1-10,000:1. The weight proportion also varies with the weight portion of solvent in the adhesive solution, viscosity of the adhesive solution, molar extinction coefficient of the neon-cut dye, and desired transmittance value.

The multifunctional adhesive film of the present invention may further comprise a solvent. The solvent may be a commonly used organic solvent, preferably methyl ethyl ketone (MEK), tetrahydrofuran (THF), ethyl acetate, toluene, etc. The content of the solvent is not particularly limited.

The adhesive film of the present invention may further comprise a crosslinking agent and a coupler.

The crosslinking agent may be a polyfunctional compound such as an isocyanate crosslinking agent, an epoxy crosslinking agent, an aziridine crosslinking agent, and a metal chelate crosslinking agent. More preferably, it is an isocyanate crosslinking agent, such as tolylene diisocyanate, xylene diisocyanate, diphenylmethane diisocyanate, hexamethylene diisocyanate, etc., although it is not limited to them. The crosslinking agent may be used at 0.01-2 parts by weight per 100 parts by weight of the acryl copolymer.

Preferably, the coupler is a silane coupler. The silane coupler improves adhesion reliability especially when left alone for a long time at high temperature and humidity. The silane coupler may be vinylsilane, epoxysilane, methacrylsilane, etc. For example, vinyltrimethoxysilane, vinyltriethoxysilane, γ-glycidoxypropyltrimethoxysilane, γ-methacryloxypropyltrimethoxysilane, etc. may be used alone or in combination. The silane coupler may be used at 0.01-2 parts by weight per 100 parts by weight of the acryl copolymer.

The method of preparing the adhesive film is not particularly limited. For example, it may be prepared by mixing a dye and a binder, adding a predetermined amount of crosslinking agent and coupler thereto to obtain a coating solution, coating it on a film, and then curing it. Preferably, the resultant coating has a thickness of at least 10 µm. The coating may be performed by spray coating, roll coating, bar coating, spin coating, and so on.

The present invention also provides a plasma display panel filter comprising the multifunctional adhesive film for a plasma display panel. The plasma display panel filter may be prepared by stacking a substrate film, an anti-reflection film (AR film), the near infrared ray film of the present invention, the multifunctional adhesive film functionalizing color compensation or both color compensation and near infrared ray blocking, an electromagnetic interference film -(EMI film), a black screen processing film, etc.

The plasma display panel filter may be prepared by adequately stacking the above-mentioned films on a transparent substrate made of glass or polyethylene terephthalate (PET). The filter of the present invention may comprise at least one near infrared ray film, a color compensation film, and a film functionalizing both color compensation and near infrared ray blocking. Each film may be located either above or below the substrate. When at least one of the multifunctional films is directly stacked on the substrate, no adhesive is used. When a layer not including the multifunctional film is formed, a commonly used pressure-sensitive adhesive (PSA) may be used. That is to say, the electromagnetic interference film and the black screen processing film may be stacked by using a conventional adhesive.

The present invention further provides a plasma display panel comprising the plasma display panel filter. The plasma display panel may be prepared by a method well known in the art, which will not be described in detail.

When a filter comprising the adhesive film of the present invention is used in a panel assembly, a plasma display panel having superior durability at high temperature and humidity with little transmittance change, superior thermal stability, and good transmittance in the visible region can be obtained.

As described above, the adhesive film for a plasma display panel, which comprises an acryl-based adhesive having superior adhesivity and durability as a binder resin and a color compensation dye or a color compensation dye and a near infrared ray blocking dye, has superior durability at high temperature and humidity with little transmittance change, superior thermal stability, good transmittance in the visible region, and superior near infrared ray blocking performance. In particular, the film is adhesive in itself, so it is unnecessary to use additional adhesive in manufacturing a plasma display panel filter which simplifies the manufacturing process and reduces thickness of the filter.

The present invention is described in further detail with reference to the preferred examples. However, the following examples are only for the understanding of the present invention and they do not limit the present invention.

### [Examples]

The multifunctional adhesive films according to the present invention were prepared and tested as follows.

### <Film preparation>

1. Preparation of coating solution: A coating solution for preparing a multifunctional adhesive film was prepared alone or by mixing with a butyl acrylate(BA)/hydroxyethyl methacrylate (HEMA) copolymer or a butyl acrylate (BA)/acrylic acid (AA) copolymer as an adhesive resin, and a neon-cut dye, a first near infrared ray blocking dye, and a second near infrared ray blocking dye.
2. Coating: The coating solution was coated on a film to a thickness of 15 µm. After drying at 120 °C for 3 minutes, the coating surface was laminated with a film.
3. Aging: Aging was performed at room temperature for 3 days.

### <Durability test>

High temperature condition: Transmittance was compared before and after keeping the film in a chamber at 80 °C for 500 hours.

### (Reference Example 1)

### The film preparation including the near infrared ray blocking dye

100 parts by weight (15.5 wt%) of a butyl acrylate (BA)/hydroxyethyl methacrylate (HEMA) copolymer solution dissolved in 84.5 ml of ethyl acetate, 0.05 parts by weight of a diimmonium dye represented by Chemical Formula 4 as a near infrared ray blocking dye (CIR1081, Japan Carlit Co.), 0.05 parts by weight of T-39M as an isocyanate crosslinking agent, and 0.07 parts by weight of T-789J as a silane coupler were added to 45 parts by weight of methyl ethyl ketone (MEK) and mixed to obtain a coating solution. The coating solution was coated on a substrate film to a thickness of 23 µm to obtain a multifunctional adhesive film.

Durability was tested as described above. The results are given in Table 1 below.

**Table 1**

| | Transmittance in the visible region (%) | | | | | | | Transmittance in the NIR region (%) | |
|---|---|---|---|---|---|---|---|---|---|
| | 438nm | 450nm | 528nm | 550nm | 586nm | 612nm | 628nm | 850nm | 950nm |
| Initial | 70.4 | 68.0 | 71.0 | 81.4 | 86.5 | 87.0 | 85.3 | 2.3 | 3.0 |
| 500 hours later | 70.3 | 67.7 | 71.7 | 82.1 | 87.3 | 87.4 | 85.5 | 2.4 | 3.1 |

As seen in Table 1, the adhesive film shows superior transmittance maintenance in the visible region and the near infrared ray (NIR) region after the high temperature test.

### (Example 2)

An adhesive film was prepared in the same manner of Example 1, except for using a phthalocyanine dye (IP12, Japan catalyst Co.) represented by Chemical Formula 5 as a near infrared ray blocking dye.

### (Example 3)

An adhesive film was prepared in the same manner of Example 1, except for using a butyl acrylate/acrylic acid copolymer solution instead of the butyl acrylate (BA)/hydroxyethyl methacrylate (HEMA) copolymer solution as an acryl-based adhesive.

### (Example 4)

100 parts by weight (15.5 wt%) of a butyl acrylate (BA)/hydroxyethyl methacrylate (HEMA) copolymer solution dissolved in 84.5 ml of ethyl acetate, 0.05 parts by weight of a porphyrin dye represented by Chemical Formula 1, 0.05 parts by weight of T-39M as an isocyanate crosslinking agent, and 0.07 parts by weight of T-789J as a silane coupler were added to 45 parts by weight of methyl ethyl ketone (MEK) and mixed to obtain a coating solution. The coating solution was coated on a substrate film to a thickness of 23 microns to obtain a multifunctional adhesive film.

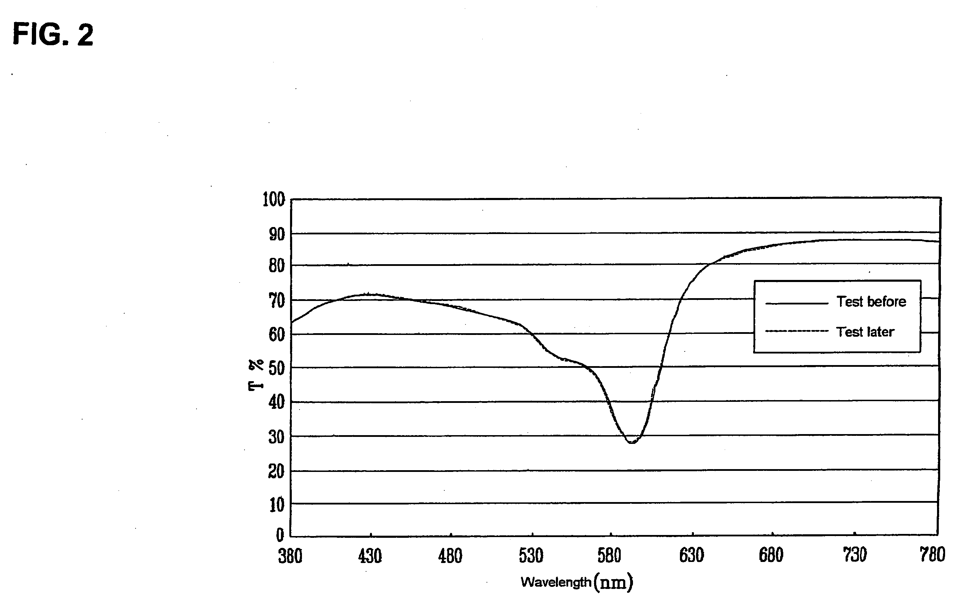

Durability was tested as described above. The results are given in Table 2 below. Spectrum change of the adhesive film is shown in FIG. 2.

**Table 2**

| | Transmittance in the visible region (%) | | | | | | |
|---|---|---|---|---|---|---|---|
| | 400 nm | 450 nm | 528 nm | 550 nm | 593 nm | 612 nm | 628 nm |
| Initial | 68.8 | 70.3 | 60.9 | 52.5 | 27.9 | 53.6 | 74.0 |
| 500 hours later | 68.7 | 70.5 | 60.5 | 52.3 | 28.0 | 54.1 | 74.2 |

As seen in Table 1 and FIG. 2, the adhesive film comprising the color compensation dye of Example 4 shows superior transmittance maintenance in the visible region.

### (Example 5)

100 parts by weight (14.5 wt%) of a butyl acrylate/acrylic acid copolymer solution dissolved in 84.5 ml of ethyl acetate, 0.05 parts by weight of a porphyrin dye represented by Chemical Formula 1, 0.23 parts by weight of T-39M as an isocyanate crosslinking agent, and 0.03 parts by weight of T-789J as a coupler were added to 45 parts by weight of methyl ethyl ketone (MEK) and mixed to obtain a coating solution. The coating solution was coated on a substrate film to obtain a multifunctional adhesive film.

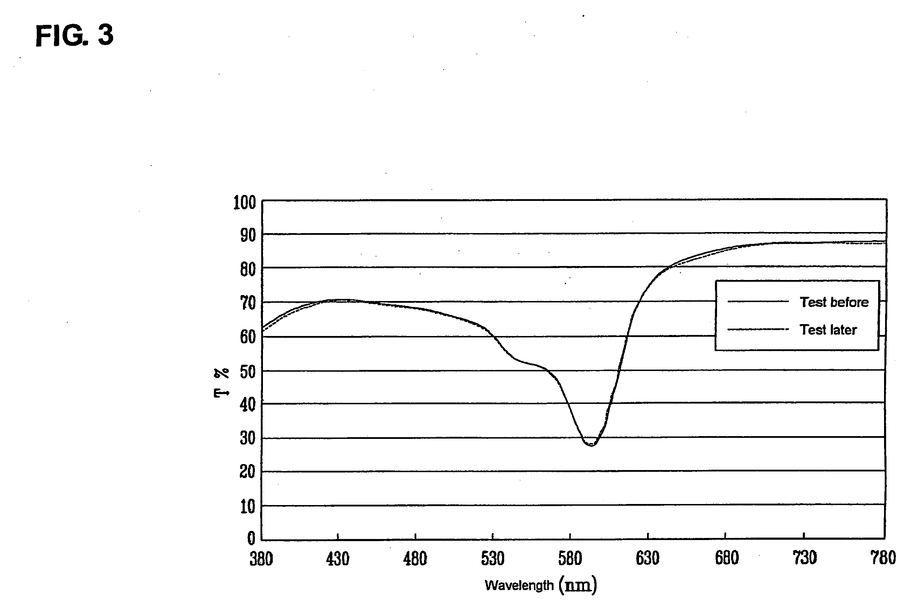

Durability was tested as described above. The results are given in Table 3 below. Spectrum change of the adhesive film is shown in FIG. 3.

**Table 3**

| | Transmittance in the visible region (%) | | | | | | |
|---|---|---|---|---|---|---|---|
| | 400 nm | 450 nm | 528 nm | 550 nm | 593 nm | 612 nm | 628 nm |
| Initial | 67.9 | 69.8 | 60.7 | 52.3 | 27.4 | 53.0 | 73.6 |
| 500 hours later | 67.0 | 69.6 | 60.5 | 52.4 | 28.0 | 53.7 | 73.6 |

As seen in Table 3 and FIG. 3, the adhesive film comprising the color compensation dye of Example 5 shows superior transmittance maintenance in the visible region.

### (Example 6)

An adhesive film was prepared in the same manner of Example 4, except for further using 0.3 parts by weight of a porphyrin dye, 0.3 parts by weight of diimmonium dye (first near infrared ray blocking dye) (CIR1081, Japan Carlit Co.), and 0.1 parts by weight of a phthalocyanine dye (second near infrared ray blocking dye) (IP12, Japan Catalyst Co.).

The coating solution was coated on a substrate film to obtain a multifunctional adhesive film.

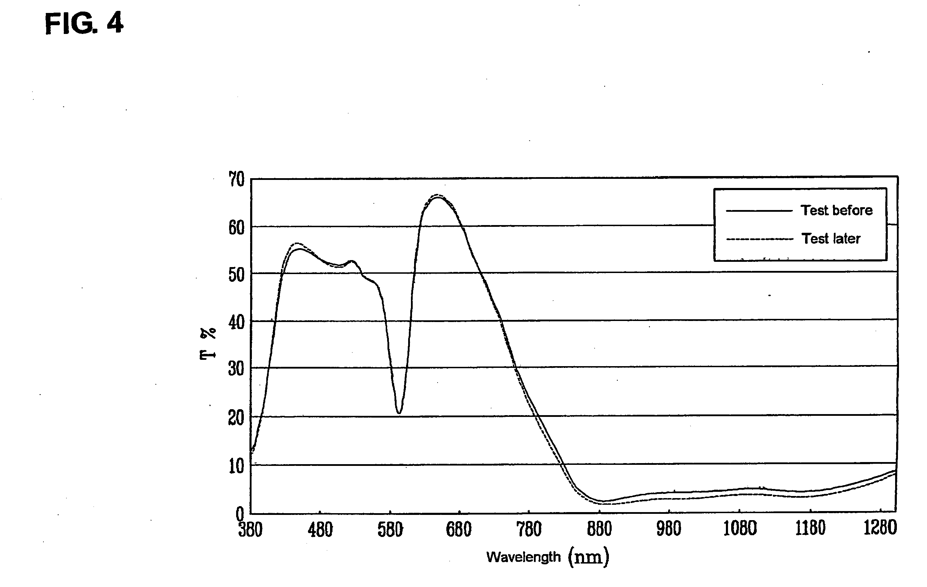

Durability was tested as described above. The results are given in Table 4 below. Spectrum change of the adhesive film is shown in FIG. 4.

**Table 4**

| | Transmittance in the visible region (%) | | | | | | | Transmittance in the NIR region (%) | |
|---|---|---|---|---|---|---|---|---|---|
| | 400 nm | 450 nm | 528 nm | 550 nm | 586 nm | 612 nm | 628 nm | 850 nm | 950 nm |
| Initial | 23.4 | 583 | 52.2 | 48.6 | 24.3 | 45.9 | 63.4 | 4.2 | 2.7 |
| 500 hours later | 23.6 | 655.3 | 52.3 | 48.5 | 24.4 | 45.4 | 62.9 | 5.0 | 4.0 |

As seen in Table 4 and FIG. 4, the adhesive film comprising the color compensation dye of Example 6 shows superior transmittance maintenance not only in the visible region but also in the NIR region.

### (Comparative Example 1)

An adhesive film was prepared by changing the composition of the coating solution to the following composition.

Composition: cyanine dye as the neon-cut dye (0.0214g, TY102: Asahi denka), 14BB (100g, acryl-based having -OH group), a curing agent (0.03g, T-39M), and a coupling agent (0.07g, T-789J).

Coating on the substrate: Bar coating, drying thickness 25µm.

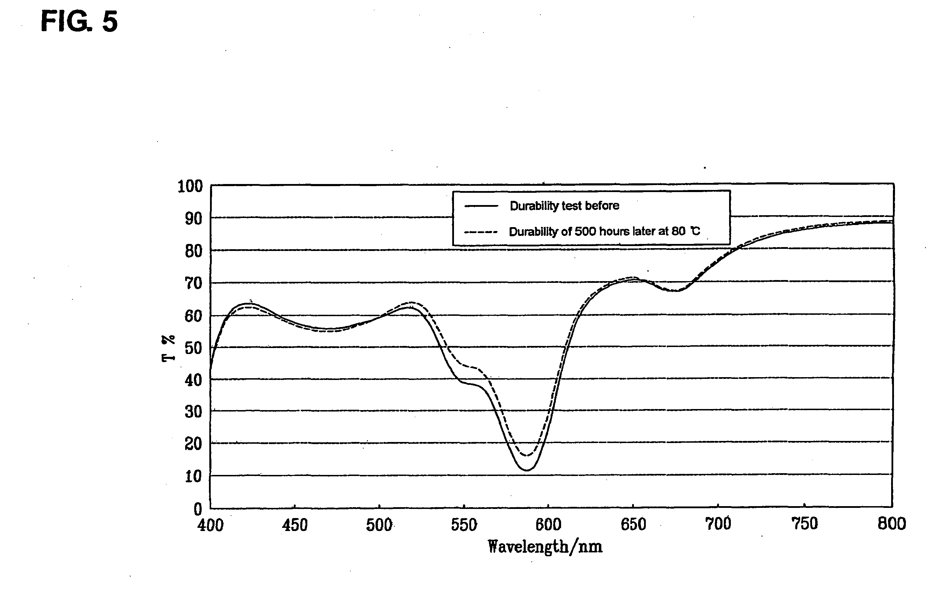

Thereafter, the durability was tested as described above. The results are given in Table 5 below, and the spectrum change of the adhesive film is shown in FIG. 5.

**Table 5**

| | Transmittance in the NIR region (%) | | | |
|---|---|---|---|---|
| Wavelength (nm) | 450 | 550 | 587 | 628 |
| Pre-durability test | 57.6 | 38.7 | 11.5 | 66.5 |
| Durability 10 min. later at 100 °C | 43.6 | 39.0 | 11.9 | 66.6 |
| Durability 500 hours later at high temperature (80 °C) | 43.0 | 44.3 | 16.1 | 67.3 |

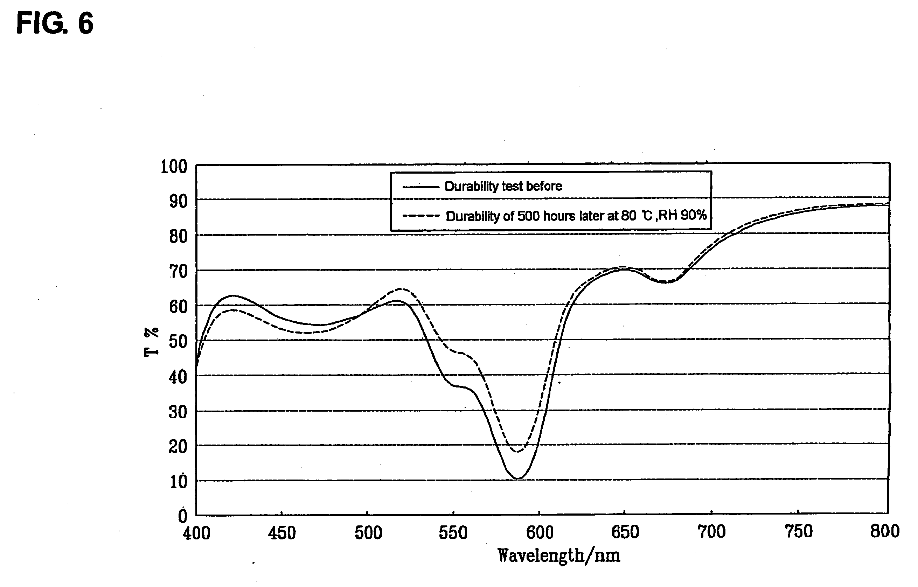

Also, the test results of high temperature and high humidity are given in Table 6, and the spectrum change of the adhesive film is shown in FIG. 6.

**Table 6**

| | Transmittance in the NIR region (%) | | | |
|---|---|---|---|---|
| Wavelength (nm) | 450 | 550 | 587 | 628 |
| Pre-durability test | 56.6 | 37.0 | 10.4 | 65.4 |
| Durability 10 min. later at 100 °C | 56.3 | 37.3 | 10.7 | 65.5 |
| Durability 500 hours later at high temperature and high humidity (80 °C, RH 90%) | 53.2 | 46.8 | 18.1 | 66.6 |

As seen in the results, the adhesive film comprising the color compensation dye of Comparative Example 1 shows inferior transmittance maintenance in the visible region, compared with Examples of the present invention.

### (Comparative Example 2)

An adhesive film was prepared by changing the composition of the coating solution to the following composition.

Composition: a cyanine NIR absorbing dye (0.01g, TY102: Asahi denka), 14BB (100g, acryl-based having -OH group), a curing agent (0.006g, T-39M), and a coupling agent (0.014g, T-789J).

Coating on the substrate: Bar coating, drying thickness 20µm.

Curing condition : 3 days at room temperature.

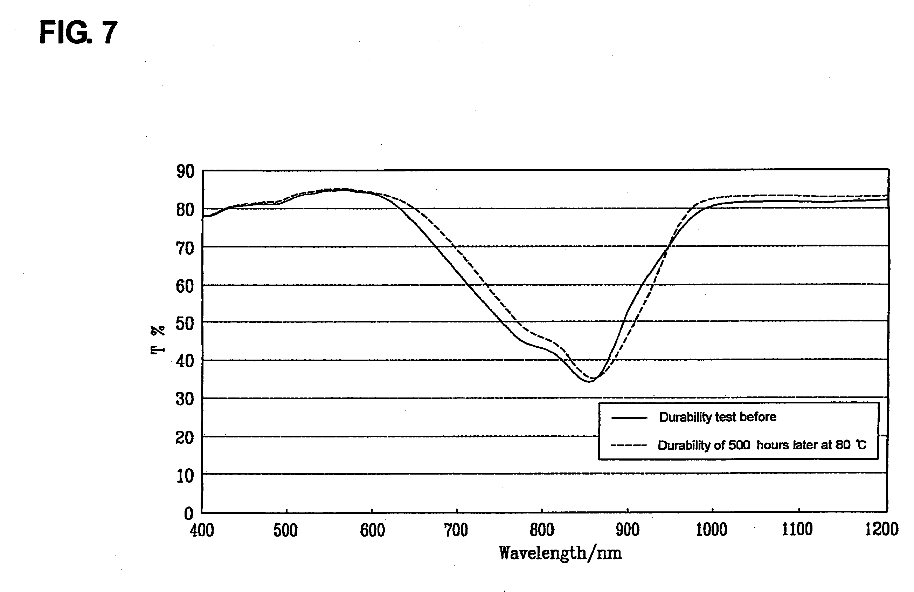

Thereafter, the durability was tested as described above. The results aregiven in Table 7 below, and the spectrum change of the adhesive film is shown in FIG. 7.

**Table 7**

| | Transmittance in the NIR region (%) | | | | |
|---|---|---|---|---|---|
| Wavelength (nm) | 450 | 550 | 586 | 628 | 854 |
| Pre-durability test | 80.9 | 84.8 | 84.3 | 80.7 | 34.2 |
| Durability 500 hours later at high temperature (80 °C) | 81.2 | 85.1 | 84.7 | 82.5 | 35.4 |

As seen in the results, the adhesive film of Comparative Example 2 also shows inferior transmittance maintenance in the visible region, compared with Examples of the present invention.

### (Example 7)

### Preparation of plasma display panel filter

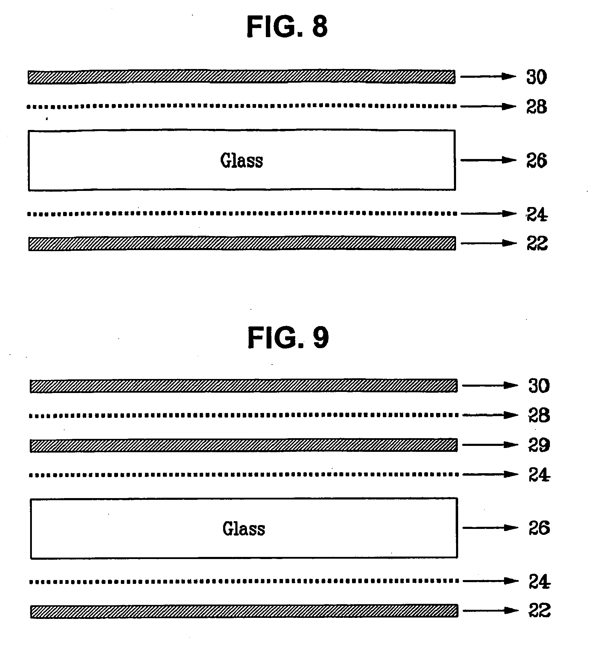

A plasma display panel filter as shown in FIG. 8 (five-layer structure) was prepared by stacking an anti-reflection film (AR film) 30, an adhesive film 28 prepared in Example 1, toughened glass 26, a pressure-sensitive adhesive layer (PSA) 24, and an electromagnetic interference film (EMI film) 22 on a glass substrate.

### (Example 8)

### Preparation of plasma display panel filter

A plasma display panel filter as shown in FIG. 9 (seven-layer structure) was prepared by stacking an anti-reflection film (AR film) 30, an adhesive film 28 prepared in Example 4, an NIR film 29, toughened glass 26, a PSA 24, and an electromagnetic interference film (EMI film) 22 on a glass substrate.

### (Comparative Example 3)

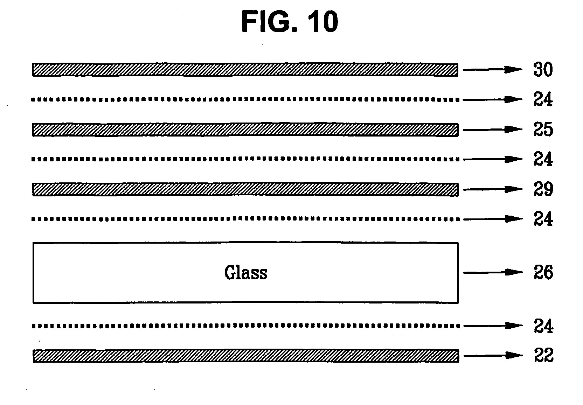

A plasma display panel filter was prepared by stacking an anti-reflection film 30, an adhesive layer 24, a color compensation film of Comparative Example 1 25, an adhesive layer 24, a conventional near infrared ray film of Comparative Example 2 29, an adhesive layer 24, toughened glass 26, an adhesive layer 24, and an electromagnetic interference film 22. All the films were laminated using a rubber adhesive (PSA). Its structure is shown in FIG. 10. The filter of Comparative Example 3 has a nine-layer structure.

As is apparent from the above description, the multifunctional adhesive film of the present invention has improved durability because an acryl-based adhesive is used as a binder resin and it functionalizes color compensation and near infrared ray blocking performances using a color compensation dye and a near infrared ray blocking dye. In addition, it has superior near infrared ray transmittance, and in particularly it requires no additional adhesive because the film itself has superior adhesivity. Thus, it can simplify the structure of the plasma display panel filter and can be utilized in manufacturing of a plasma display panel filter and a plasma display panel.While the present invention has been described in detail with reference to the preferred embodiments, those skilled in the art will appreciate that various modifications and substitutions can be made thereto without departing from the spirit and scope of the present invention as set forth in the appended claims.

## Claims

1. A multifunctional adhesive film for a plasma display panel comprising an acryl-based adhesive and a near infrared ray blocking dye,
wherein the near-infrared ray blocking dye is contained in the layer having the acryl-based adhesive and the acryl-based adhesive functions as a binder resin; and
the near infrared ray blocking dye is at least one selected from the group consisting of a phthalocyanine dye represented by Chemical Formula 5 below, a naphthalocyanine dye represented by Chemical Formula 6 below and a metal-complex dye represented by Chemical Formula 7 or Chemical Formula 8 below: 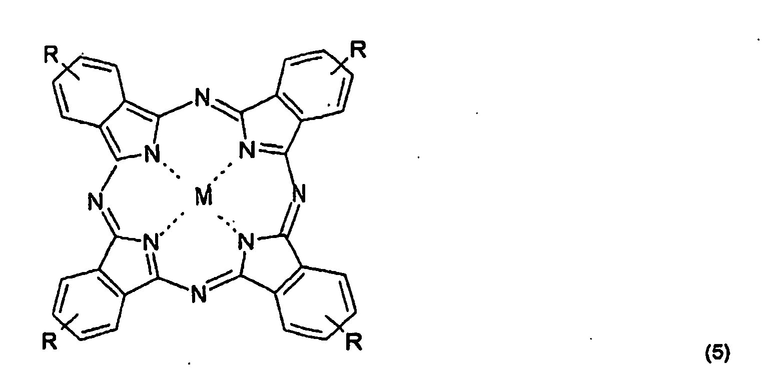 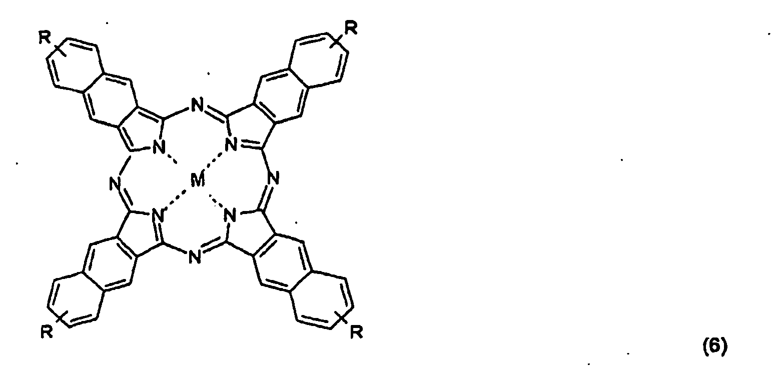 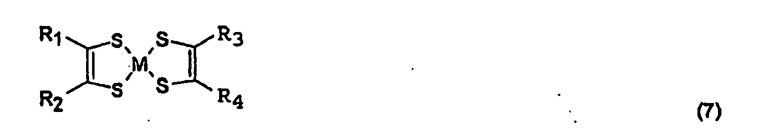 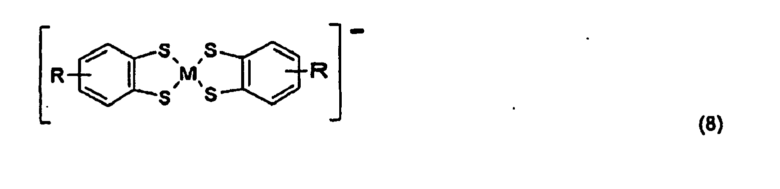 where
in Chemical Formulas 5 and 6, each of R is, independently, a hydrogen atom, a halogen atom, a substituted or unsubstituted alkyl group with C₁-C₁₆, a substituted or unsubstituted phenyl group, a substituted or unsubstituted alkoxy group having C₁-C₅, a substituted or unsubstituted allyloxy group, a fluorine-substituted alkoxy group, or a pentagonal ring having at least one substituted or unsubstituted nitrogen atom, and M is at least one selected from the group consisting of two hydrogen atoms, a divalent metal atom, a trivalent or tetravalent substituted metal atom, and an oxy-metal atom, and is preferably Ni, Pt, Pd, or Cu; and
in Chemical Formulas 7 and 8, each of R and R₁-R₄ is, independently, a hydrogen atom, an alkyl group having C₁-C₁₆, an aryl group, an alkoxy group, a phenoxy group, a hydroxy group, an alkylamino group having C₁-C₁₆, an arylamino group, a trifluoromethyl group, an alkylthio group having C₁-C₁₆, an arylthio group, a nitro group, a cyano group, a halogen atom, a phenyl group, or a naphthyl group.

2. The multifunctional adhesive film of claim 1, wherein the acryl-based adhesive is a butyl acrylate/hydroxyethyl methacrylate copolymer or a butyl acrylate/acrylic acid copolymer.

3. The multifunctional adhesive film of claim 1, wherein the near infrared ray blocking dye is comprised at 0.01-10 parts by weight per 100 parts by weight of the acryl-based adhesive.

4. The multifunctional adhesive film of claim 1, which further comprises at least one additive selected from the group consisting of 0.01-2 parts by weight of a crosslinking agent and 0.01-2 parts by weight of a coupler per 100 parts by weight of the pressure-sensitive acryl-based adhesive.

5. A plasma display panel filter comprising any multifunctional adhesive film of claims 1 to 4 on at least one side of a substrate.

6. The plasma display panel filter of claim 5, which further comprises an anti-reflection film (AR film), an electromagnetic interference film (EMI film), and a black screen processing film.

7. A plasma display panel comprising the filter of claim 5.

8. A multifunctional adhesive film comprising an acryl-based adhesive and a neon-cut dye,
wherein the neon-cut dye is contained in the layer having the acryl-based adhesive and the acryl-based adhesive functions as a binder resin, and
the neon-cut dye is at least one selected from the group consisting of a porphyrin compound having an intramolecular metal-complex structure, as represented by Chemical Formula 1 below, and a cyanine compound having an intermolecular metal-complex structure, as represented by Chemical Formula 2 or Chemical Formula 3 below: 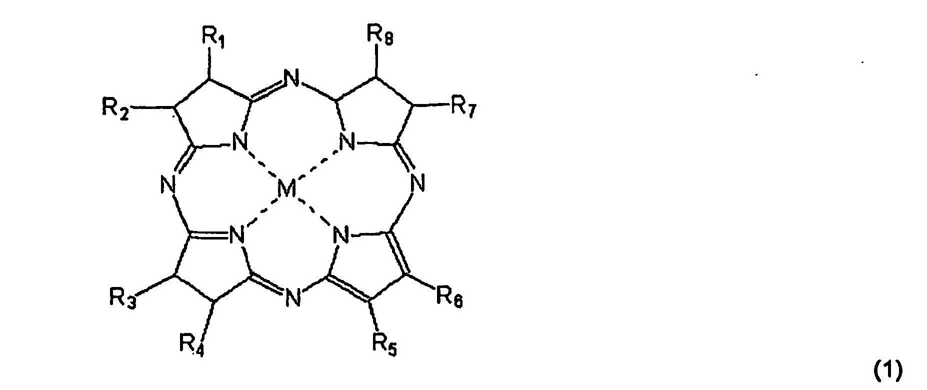 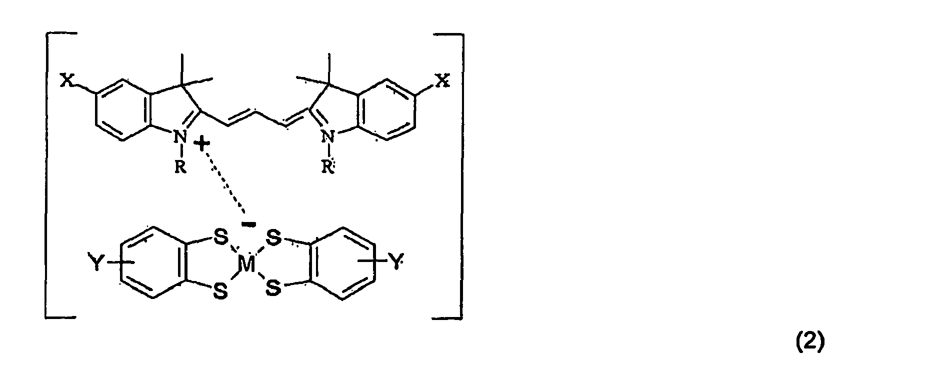 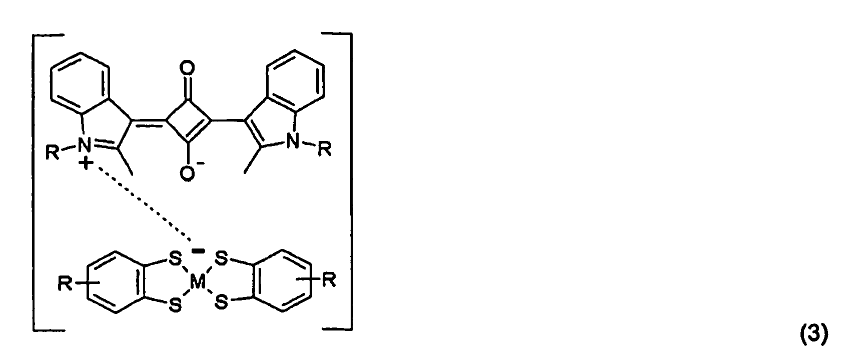 where
in Chemical Formula 1,
each of R₁-R₈ is, independently, a hydrogen atom, a halogen atom, a substituted or unsubstituted alkyl group having C₁-C₁₆, or an alkoxy group having C₁-C₁₆, a substituted or unsubstituted phenyl group, a substituted or unsubstituted allyloxy group, a fluorine-substituted alkoxy group, or a pentagonal ring having at least one substituted or unsubstituted nitrogen atom, and M is a hydrogen atom, an oxygen atom, a halogen atom, or a coordinated divalent to tetravalent metal atom; and,
in Chemical Formulas 2 and 3,
each of R is, independently, a hydrogen atom, a substituted or unsubstituted aliphatic hydrocarbon having 1-30 carbon atoms, an alkoxy group having 1-8 carbon atoms, or an aryl group having 6-30 carbon atoms, and each of X and Y is, independently, a halogen atom, a nitro group, a carboxyl group, an alkoxy group having 2-8 carbon atoms, a phenoxycarbonyl group, a carboxylate group, an alkyl group having 1-8 carbon atoms, an alkoxy group having 1-8 carbon atoms, or an aryl group having 6-30 carbon atoms.

9. The multifunctional adhesive film of claim 8, wherein the acryl-based adhesive is a butyl acrylate/hydroxyethyl methacrylate copolymer or a butyl acrylate/acrylic acid copolymer.

10. The multifunctional adhesive film of claim 8, wherein the neon-cut dye is comprised at 0.01-10 parts by weight per 100 parts by weight of the acryl-based adhesive.

11. The multifunctional adhesive film of claim 8, which further comprises 0.01-10 parts by weight of a near infrared ray blocking dye per 100 parts by weight of the acryl-based adhesive.

12. The multifunctional adhesive film of claim 11, wherein the near infrared ray blocking dye is at least one selected from the group consisting of a diimmonium dye represented by Chemical Formula 4 below, a phthalocyanine dye represented by Chemical Formula 5 below, a naphthalocyanine dye represented by Chemical Formula 6 below, and a metal-complex dye represented by Chemical Formula 7 or Chemical Formula 8: 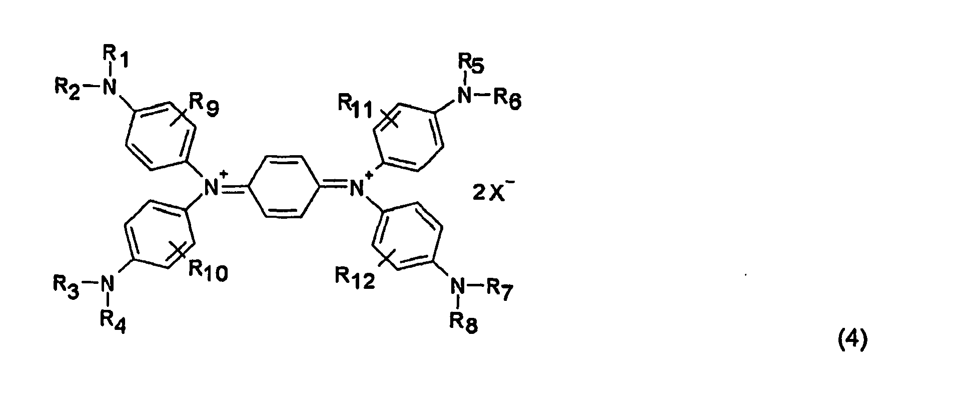 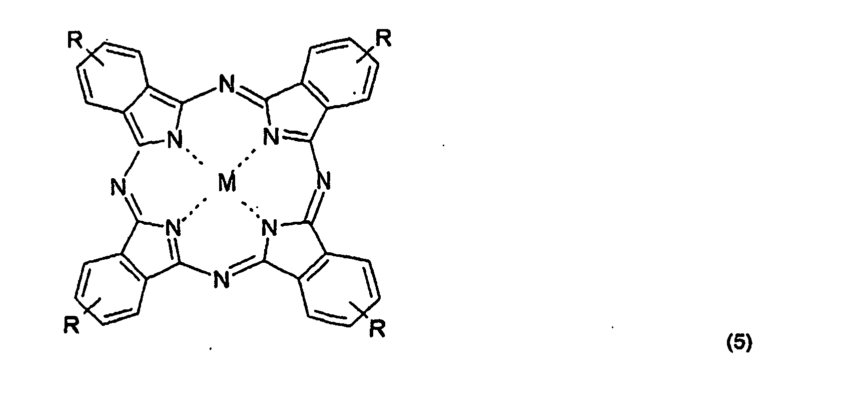 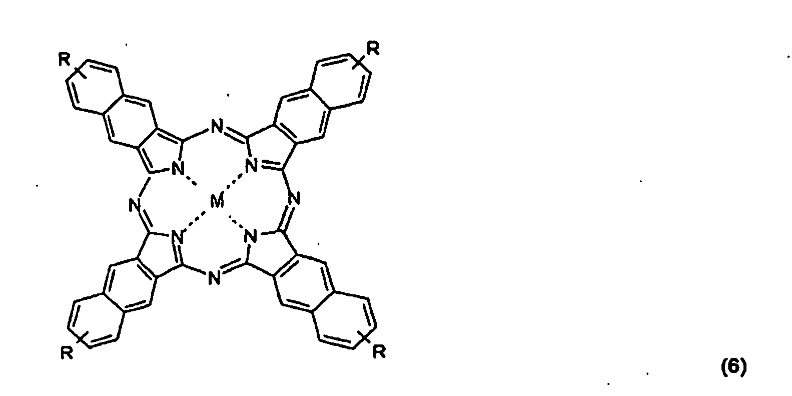 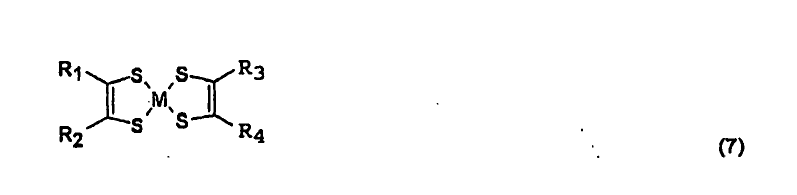 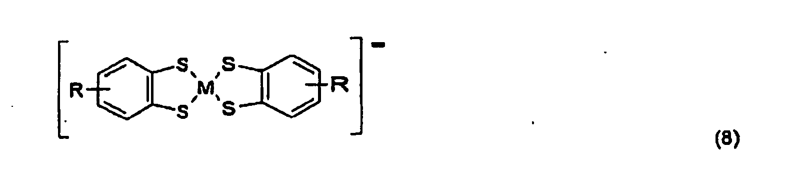 where
in Chemical Formula 4, each of R₁-R₁₂ is, independently, a hydrogen atom, a halogen atom, a substituted or unsubstituted alkyl group with C₁-C₁₆, or a substituted or unsubstituted aryl group with C₁-C₁₆, and X is a monovalent or divalent organic anion, or a monovalent or divalent inorganic anion;
in Chemical Formulas 5 and 6, each of R is, independently, a hydrogen atom, a halogen atom, a substituted or unsubstituted alkyl group with C₁-C₁₆, a substituted or unsubstituted phenyl group, a substituted or unsubstituted alkoxy group having C₁-C₅, a substituted or unsubstituted allyloxy group, a fluorine-substituted alkoxy group, or a pentagonal ring having at least one substituted or unsubstituted nitrogen atom, and M is at least one selected from the group consisting of two hydrogen atoms, a divalent metal atom, a trivalent or tetravalent substituted metal atom, and an oxy-metal atom, and is preferably Ni, Pt, Pd, or Cu; and
in Chemical Formulas 7 and 8, each of R and R₁-R₄ is, independently, a hydrogen atom, an alkyl group having C₁-C₁₆, an aryl group, an alkoxy group, a phenoxy group, a hydroxy group, an alkylamino group having C₁-C₁₆, an arylamino group, a trifluoromethyl group, an alkylthio group having C₁-C₁₆, an arylthio group, a nitro group, a cyano group, a halogen atom, a phenyl group, or a naphthyl group.

13. The multifunctional adhesive film of claim 8, which further comprises at least one additive selected from the group consisting of 0.01-2 parts by weight of a crosslinking agent and 0.01-2 parts by weight of a coupler per 100 parts by weight of the pressure-sensitive acryl-based adhesive.

14. A plasma display panel filter comprising any multifunctional adhesive film of claims 8-13 on at least one side of a substrate.

15. The plasma display panel filter of claim 14, which further comprises an anti-reflection film (AR film), an electromagnetic interference film (EMI film), and a black screen processing film.

16. A plasma display panel comprising the filter of claim 14.

17. The multifunctional adhesive film of claim 1, wherein the acryl-based adhesive has a glass transition temperature (Tg) of 0 °C or below.

18. The multifunctional adhesive film of claim 1, wherein the acryl-based adhesive is obtained from copolymerization of 75-99.89 wt% of a (meth)acrylate ester monomer having a C₁₋₁₂ alkyl group, 0.1-20 wt% of an α,β-unsaturated carboxylate monomer and 0.01-5 wt% of a polymeric monomer having a hydroxyl group.

## Patentansprüche

1. Multifunktionelle Klebefolie für ein Plasmaanzeigefeld, umfassend einen Kleber auf Acrylbasis und einen Nahinfrarotstrahlen-Blockierungsfarbstoff,
wobei der Nahinfrarotstrahlen-Blockierungsfarbstoff in der Schicht mit einem Klebstoff auf Acrylbasis enthalten ist und der Klebstoff auf Acrylbasis als Bindemittelharz fungiert; und
der Nahinfrarotstrahlen-Blockierungsfarbstoff zumindest einer, ausgewählt aus der Gruppe bestehend aus einem Phthalocyanin-Farbstoff der nachstehenden chemischen Formel (5), einem Naphthalocyanin-Farbstoff der nachstehenden chemischen Formel (6) und einem Metallkomplex-Farbstoff der nachstehenden chemischen Formel (7) oder Formel (8), ist: 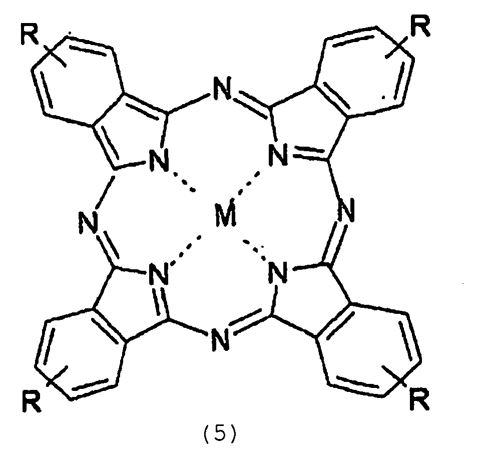 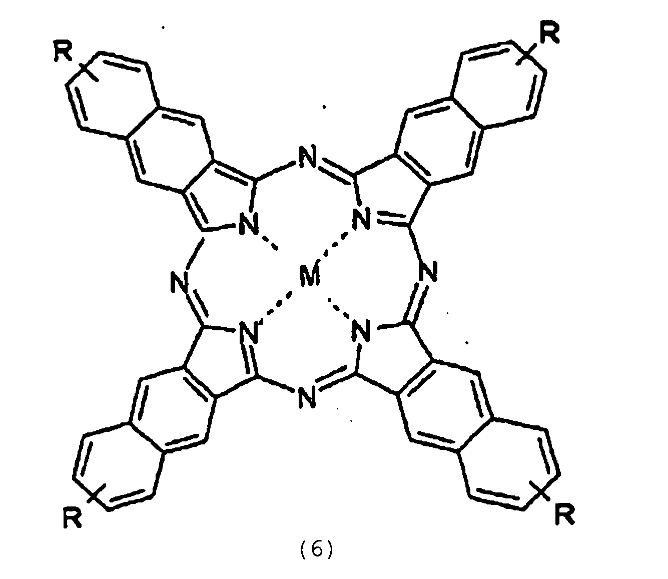 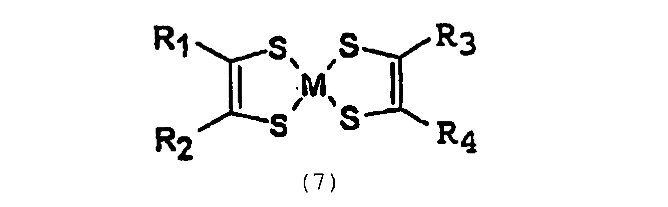 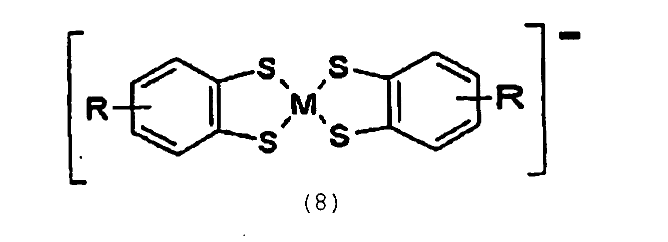 worin
in den chemischen Formeln (5) und (6) jedes R unabhängig voneinander ein Wasserstoffatom, ein Halogenatom, eine substituierte oder unsubstituierte Alkylgruppe mit 1 bis 16 Kohlenstoffatomen, eine substituierte oder unsubstituierte Phenylgruppe, eine substituierte oder unsubstituierte Alkoxygruppe mit 1 bis 5 Kohlenstoffatomen, eine substituierte oder unsubstituierte Allyloxygruppe, eine Fluor-substituierte Alkoxygruppe oder ein fünfeckiger Ring mit mindestens einem substituierten oder unsubstituierten Stickstoffatom ist, und M zumindest eines, ausgewählt aus der Gruppe bestehend aus zwei Wasserstoffatomen, einem zweiwertigen Metallatom, einem dreiwertigen oder vierwertigen substituierten Metallatom und einem Oxymetallatom, und vorzugsweise Ni, Pt, Pd oder Cu ist; und
in den chemischen Formeln (7) und (8) jedes von R und R₁ bis R₄ unabhängig voneinander ein Wasserstoffatom, eine Alkylgruppe mit 1 bis 16 Kohlenstoffatomen, eine Arylgruppe, eine Alkoxygruppe, eine Phenoxygruppe, eine Hydroxygruppe, eine Alkylaminogruppe mit 1 bis 16 Kohlenstoffatomen, eine Arylaminogruppe, eine Trifluormethylgruppe, eine Alkylthiogruppe mit 1 bis 16 Kohlenstoffatomen, eine Arylthiogruppe, eine Nitrogruppe, eine Cyanogruppe, ein Halogenatom, eine Phenylgruppe oder eine Naphthylgruppe ist.

2. Multifunktionelle Klebefolie gemäss Anspruch 1, worin der Klebstoff auf Acrylbasis ein Butylacrylat/Hydroxyethylmethacrylat-Copolymer oder ein Butylacrylat/Acrylsäure-Copolymer ist.

3. Multifunktionelle Klebefolie gemäss Anspruch 1, worin der Nahinfrarotstrahlen-Blockierungsfarbstoff in einer Menge von 0,01 bis 10 Gew.-Teilen pro 100 Gew.-Teilen des Klebstoffs auf Acrylbasis enthalten ist.

4. Multifunktionelle Klebefolie gemäss Anspruch 1, die ferner wenigstens ein Additiv, ausgewählt aus der Gruppe bestehend aus 0,01 bis 2 Gew.-Teilen eines Vernetzungsmittels und 0,01 bis 2 Gew.-Teilen eines Kupplers pro 100 Gew.-Teilen des druckempfindlichen Klebstoffs auf Acrylbasis, umfasst.

5. Plasmanzeigefeldfilter, umfassend irgendeine der multifunktionellen Klebefolien gemäss den Ansprüchen 1 bis 4 auf mindestens einer Seite eines Substrats.

6. Plasmanzeigefeldfilter gemäss Anspruch 5, der ferner einen Antireflexionsfilm (AR-Film), einen elektromagnetischen Interferenzfilm (EMI-Film) und einen Schwarzbild-Verarbeitungsfilm umfasst.

7. Plasmaanzeigefeld, umfassend den Filter gemäss Anspruch 5.

8. Multifunktionelle Klebefolie, umfassend einen Klebstoff auf Acrylbasis und einen Neon-Cut-Farbstoff,
wobei der Neon-Cut-Farbstoff in der Schicht mit einem Klebstoff auf Acrylbasis enthalten ist und der Klebstoff auf Acrylbasis als Bindemittelharz fungiert; und
der Neon-Cut-Farbstoff zumindest einer, ausgewählt aus der Gruppe bestehend aus einer Porphyrinverbindung mit einer intramolekularen Metallkomplexstruktur, wie nachstehend durch die chemische Formel (1) dargestellt, und einer Cyanverbindung mit einer intramolekularen Metallkomplexstruktur, wie nachstehend durch die chemische Formel (2) oder die chemische Formel (3) dargestellt, ist: 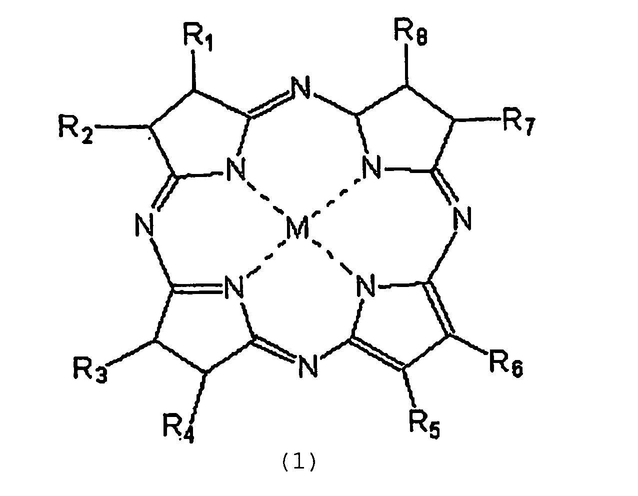 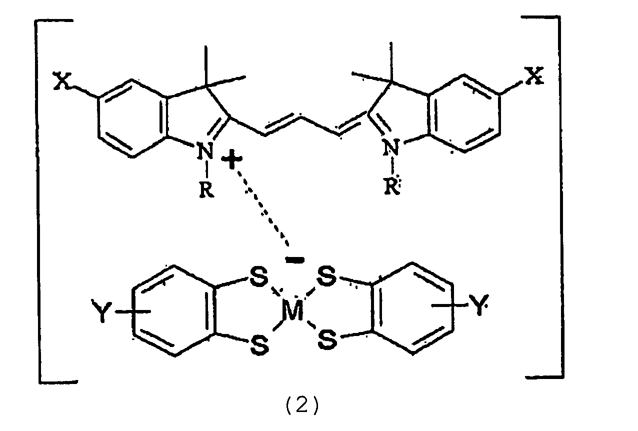 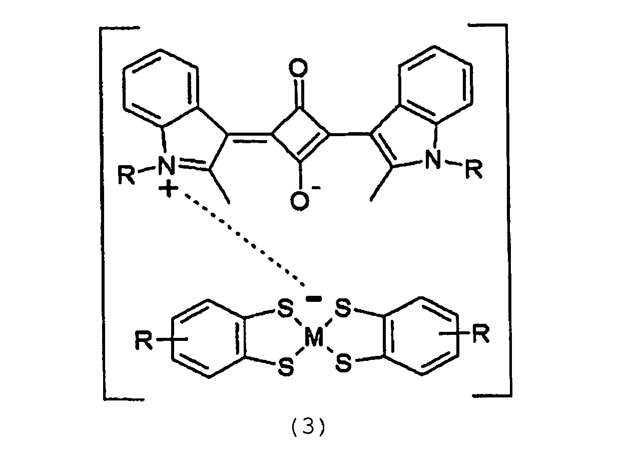 worin
in der chemischen Formel (1) jedes von R₁ bis R₈ unabhängig voneinander ein Wasserstoffatom, ein Halogenatom, eine substituierte oder unsubstituierte Alkylgruppe mit 1 bis 16 Kohlenstoffatome, oder eine Alkoxygruppe mit 1 bis 16 Kohlenstoffatomen, eine substituierte oder unsubstituierte Phenylgruppe, eine substituierte oder unsubstituierte Allyloxygruppe, eine Fluor-substituierte Alkoxygruppe oder ein fünfeckiger Ring mit mindestens einem substituierten oder unsubstituierten Stickstoffatom sind, und M ein Wasserstoffatom, ein Sauerstoffatom, ein Halogenatom oder eine koordiniertes zweiwertiges bis vierwertiges Metallatom ist; und
in den chemischen Formeln (2) und (3) jedes R unabhängig voneinander ein Wasserstoffatom, ein substituierter oder unsubstituierter aliphatischer Kohlenwasserstoff mit 1 bis 30 Kohlenstoffatomen, eine Alkoxygruppe mit 1 bis 8 Kohlenstoffatomen oder eine Arylgruppe mit 6 bis 30 Kohlenstoffatomen ist, und jedes von X und Y unabhängig voneinander ein Halogenatom, eine Nitrogruppe, eine Carboxylgruppe, eine Alkoxygruppe mit 2 bis 8 Kohlenstoffatomen, eine Phenoxycarbonylgruppe, eine Carboxylatgruppe, eine Alkylgruppe mit 1 bis 8 Kohlenstoffatomen, eine Alkoxygruppe mit 1 bis 8 Kohlenstoffatomen oder eine Arylgruppe mit 6 bis 30 Kohlenstoffatomen, ist.

9. Multifunktionelle Klebefolie gemäss Anspruch 8, worin der Klebstoff auf Acrylbasis ein Butylacrylat/Hydroxyethylmethacrylat-Copolymer oder ein Butylacrylat/Acrylsäure-Copolymer ist.

10. Multifunktionelle Klebefolie gemäss Anspruch 8, worin der Neon-Cut-Farbstoff in einer Menge von 0,01 bis 10 Gew.-Teilen pro 100 Gew.-Teilen des Klebstoffs auf Acrylbasis enthalten ist.

11. Multifunktionelle Klebefolie gemäss Anspruch 8, die ferner 0,01 bis 10 Gew.-Teile eines Nahinfrarotstrahlen-Blockierungsfarbstoffs pro 100 Gew.-Teilen des Klebstoffs auf Acrylbasis, umfasst.

12. Multifunktionelle Klebefolie gemäss Anspruch 11, worin der Nahinfrarotstrahlen-Blockierungsfarbstoff mindestens einer, ausgewählt aus der Gruppe bestehend aus einem Diimmonium-Farbstoff der nachstehenden chemischen Formel (4), einem Phthalocyanin-Farbstoff der nachstehenden chemischen Formel (5), einem Naphthalocyanin-Farbstoff der nachstehenden chemischen Formel (6) und einem Metallkomplex-Farbstoff der nachstehenden chemischen Formel (7) oder der chemischen Formel (8), ist: 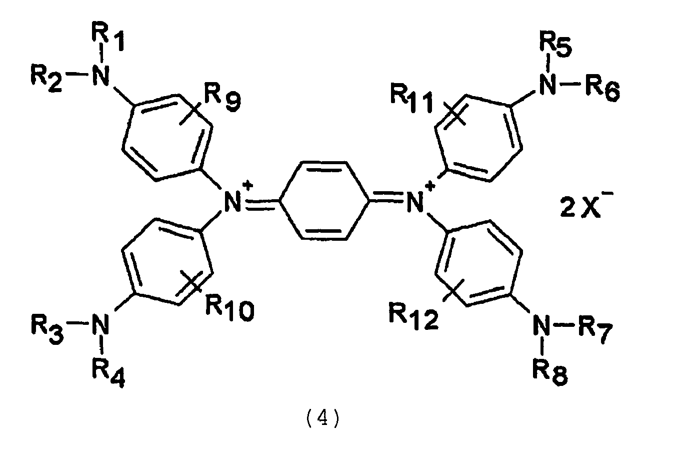 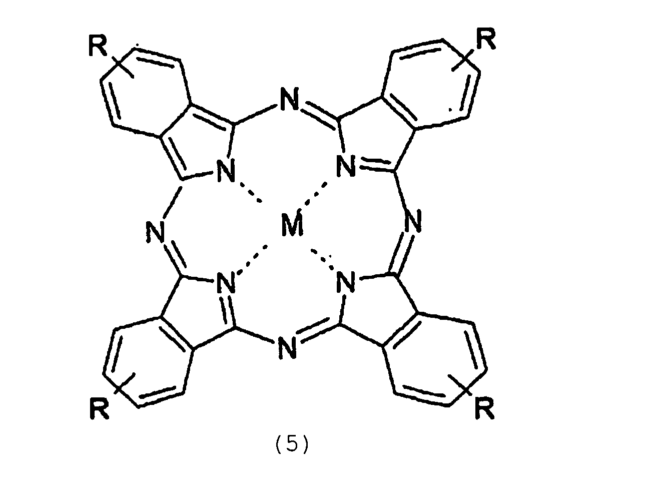 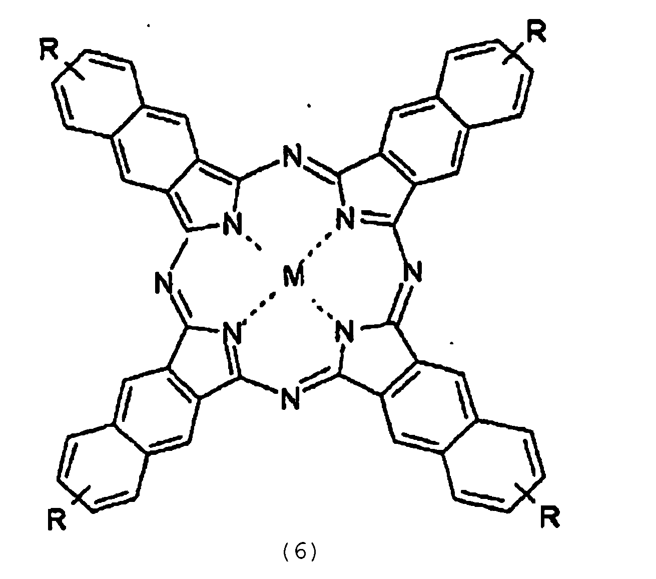 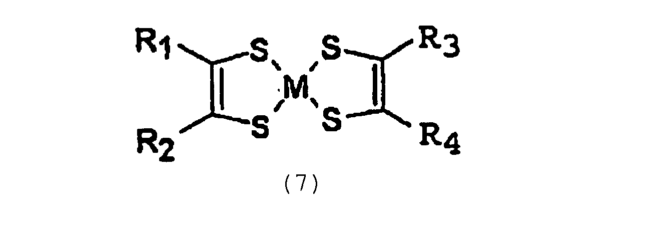 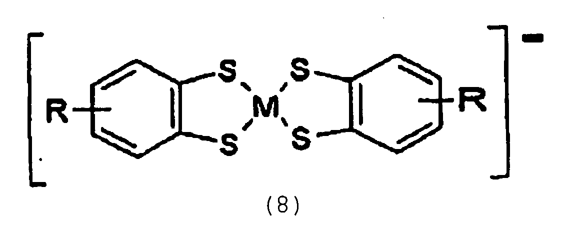 worin
in der chemischen Formel (4) jedes von R₁ bis R₁₂ unabhängig voneinander ein Wasserstoffatom, ein Halogenatom, eine substituierte oder unsubstituierte Alkylgruppe mit 1 bis 16 Kohlenstoffatomen oder eine substituierte oder unsubstituierte Arylgruppe mit 1 bis 16 Kohlenstoffatomen ist, und X ein einwertiges oder zweiwertiges organisches Anion oder ein einwertiges oder zweiwertiges anorganisches Anion ist;
in den chemischen Formeln (5) und (6) jedes R unabhängig voneinander ein Wasserstoffatom, ein Halogenatom, eine substituierte oder unsubstituierte Alkylgruppe mit 1 bis 16 Kohlenstoffatomen, eine substituierte oder unsubstituierte Phenylgruppe, eine substituierte oder unsubstituierte Alkoxygruppe mit 1 bis 5 Kohlenstoffatomen, eine substituierte oder unsubstituierte Allyloxygruppe, eine Fluor-substituierte Alkoxygruppe oder ein fünfeckiger Ring mit mindestens einem substituierten oder unsubstituierten Stickstoffatom ist, und M zumindest eines, ausgewählt aus der Gruppe bestehend aus zwei Wasserstoffatomen, einem zweiwertigen Metallatom, einem dreiwertigen oder vierwertigen substituierten Metallatom und einem Oxymetallatom, und vorzugsweise Ni, Pt, Pd oder Cu ist; und
in den chemischen Formeln (7) und (8) jedes von R und R₁ bis R₄ unabhängig voneinander ein Wasserstoffatom, eine Alkylgruppe mit 1 bis 16 Kohlenstoffatomen, eine Arylgruppe, eine Alkoxygruppe, eine Phenoxygruppe, eine Hydroxygruppe, eine Alkylaminogruppe mit 1 bis 16 Kohlenstoffatomen, eine Arylaminogruppe, eine Trifluormethylgruppe, eine Alkylthiogruppe mit 1 bis 16 Kohlenstoffatomen, eine Arylthiogruppe, eine Nitrogruppe, eine Cyanogruppe, ein Halogenatom, eine Phenylgruppe oder eine Naphthylgruppe ist.

13. Multifunktionelle Klebefolie gemäss Anspruch 8, die ferner mindestens ein Additiv, ausgewählt aus der Gruppe bestehend aus 0,01 bis 2 Gew.-Teilen eines Vernetzungsmittels und 0,01 bis 2 Gew.-Teilen eines Kupplers pro 100 Gew.-Teilen des druckempfindlichen Klebstoffs auf Acrylbasis, umfasst.

14. Plasmanzeigefeldfilter, umfassend irgendeine der multifunktionellen Klebefolien gemäss den Ansprüchen 8 bis 13 auf mindestens einer Seite eines Substrats.

15. Plasmanzeigefeldfilter gemäss Anspruch 14, der ferner einen Antireflexionsfilm (AR-Film), einen elektromagnetischen Interferenzfilm (EMI-Film) und einen Schwarzbild-Verarbeitungsfilm umfasst.

16. Plasmaanzeigefeld, umfassend den Filter gemäss Anspruch 14.

17. Multifunktionelle Klebefolie gemäss Anspruch 1, worin der Klebstoff auf Acrylbasis eine Glasübergangstemperatur (Tg) von 0°C oder darunter hat.

18. Multifunktionelle Klebefolie gemäss Anspruch 1, worin der Klebstoff auf Acrylbasis durch Copolymerisation von 75 bis 99,89 Gew.% eines (Meth)acrylatestermonomers mit einer C₁₋₁₂-Alkylgruppe, 0,1 bis 20 Gew.% eines α,β-ungesättigten Carboxylatmonomers und 0,01 bis 5 Gew.% eines polymeren Monomers mit einer Hydroxylgruppe erhalten wird.

## Revendications

1. Film adhésif multifonctionnel pour un panneau d'affichage plasma comprenant un adhésif à base acrylique et un colorant arrêtant le rayon proche infrarouge,
dans lequel le colorant arrêtant le rayon proche infrarouge est contenu dans la couche ayant l'adhésif à base acrylique et l'adhésif à base acrylique fonctionne en tant que résine de liaison ; et
le colorant arrêtant le rayon proche infrarouge est au moins un sélectionné dans le groupe constitué par un colorant de type phtalocyanine représenté par la Formule Chimique 5 ci-dessous, un colorant de type naphtalocyanine représenté par la Formule Chimique 6 ci-dessous et un colorant à complexe métallique représenté par la Formule Chimique 7 ou la Formule Chimique 8 ci-dessous : 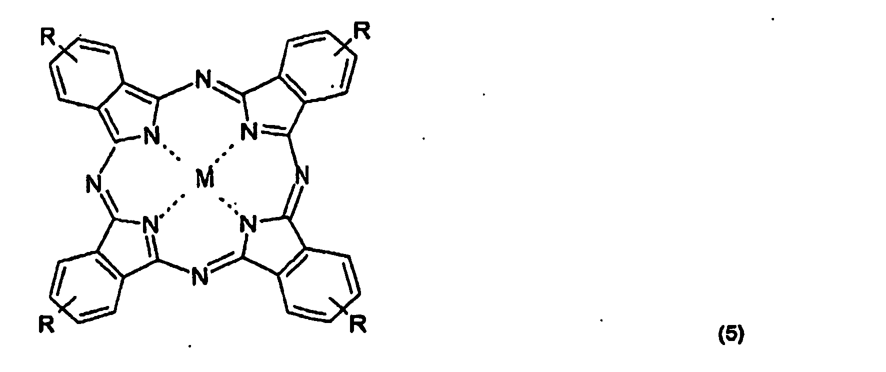 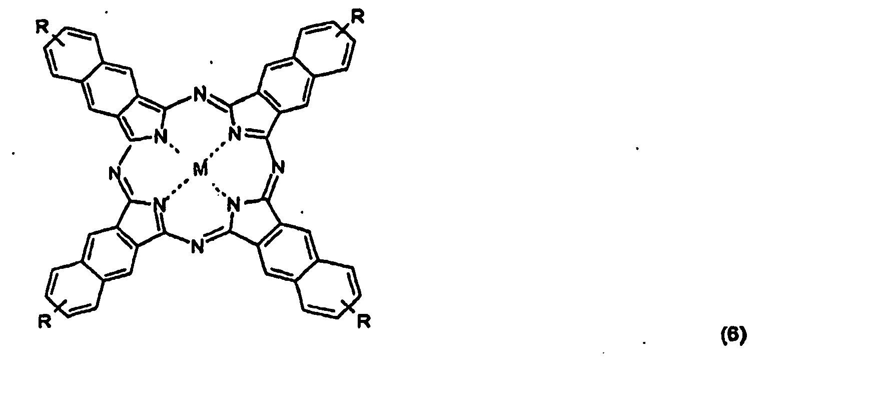 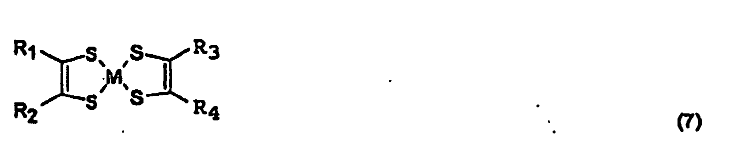 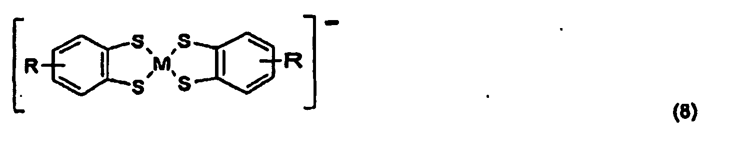 dans lesquelles :
dans les Formules Chimiques 5 et 6, chacun des R est, indépendamment, un atome d'hydrogène, un atome d'halogène, un groupe alkyle en C₁-C₁₆ substitué ou non substitué, un groupe phényle substitué ou non substitué, un groupe alcoxy en C₁-C₅ substitué ou non substitué, un groupe allyloxy substitué ou non substitué, un groupe alcoxy substitué par du fluor, ou un cycle pentagonal ayant au moins un atome d'azote substitué ou non substitué, et M est au moins un élément sélectionné dans le groupe constitué par deux atomes d'hydrogène, un atome de métal divalent, un atome de métal trivalent ou tétravalent substitué, et un atome d'oxymétal, et est de préférence Ni, Pt, Pd, ou Cu ; et
dans les Formules Chimiques 7 et 8, chacun des R et R₁ à R₄ est, indépendamment, un atome d'hydrogène, un groupe alkyle en C₁-C₁₆, un groupe aryle, un groupe alcoxy, un groupe phénoxy, un groupe hydroxy, un groupe alkylamino en C₁-C₁₆, un groupe arylamino, un groupe trifluorométhyle, un groupe alkylthio en C₁-C₁₆, un groupe arylthio, un groupe nitro, un groupe cyano, un atome d'halogène, un groupe phényle, ou un groupe naphtyle.

2. Film adhésif multifonctionnel de la revendication 1, dans lequel l'adhésif à base acrylique est un copolymère d'acrylate de butyle / méthacrylate d'hydroxyéthyle ou un copolymère d'acrylate de butyle / acide acrylique.

3. Film adhésif multifonctionnel de la revendication 1, dans lequel le colorant arrêtant le rayon proche infrarouge est compris entre 0,01 et 10 parties en poids pour 100 parties en poids de l'adhésif à base acrylique.

4. Film adhésif multifonctionnel de la revendication 1, qui comprend en outre au moins un additif sélectionné dans le groupe constitué par 0,01 à 2 parties en poids d'un agent de réticulation et 0,01 à 2 parties en poids d'un coupleur pour 100 parties en poids de l'adhésif à base acrylique sensible à la pression.

5. Filtre de panneau d'affichage plasma comprenant un quelconque film adhésif multifonctionnel des revendications 1 à 4 sur au moins un côté d'un substrat.

6. Filtre de panneau d'affichage plasma de la revendication 5, qui comprend en outre un film antireflet (film AR), un film protecteur d'interférences électromagnétiques (film EMI), et un film à technologie de fenêtre obscure.

7. Panneau d'affichage plasma comprenant le filtre de la revendication 5.

8. Film adhésif multifonctionnel comprenant un adhésif à base acrylique et un colorant de type neon-cut,
dans lequel le colorant de type neon-cut est contenu dans la couche ayant l'adhésif à base acrylique, et l'adhésif à base acrylique fonctionne en tant que résine de liaison, et
le colorant de type neon-cut est au moins un composé sélectionné dans le groupe constitué par un composé de porphyrine ayant une structure à complexe métallique intramoléculaire, comme représenté par la Formule Chimique 1 ci-dessous, et un composé cyanine ayant une structure à complexe métallique intramoléculaire, comme représenté par la Formule Chimique 2 ou la Formule Chimique 3 ci-dessous : 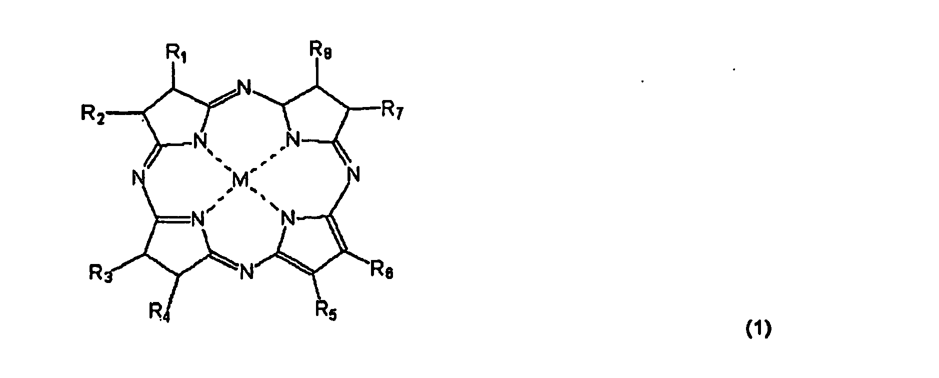 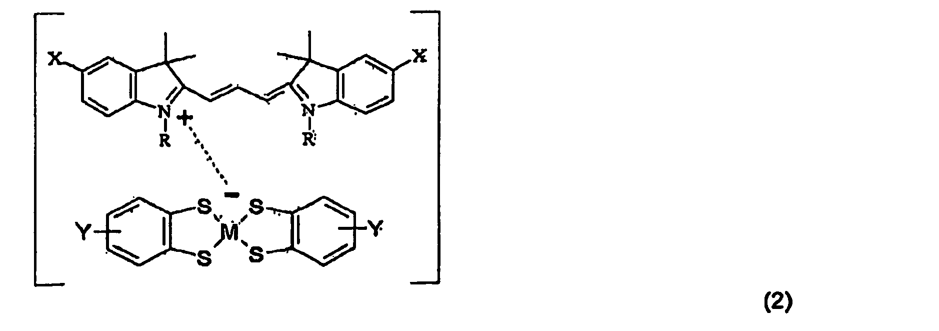 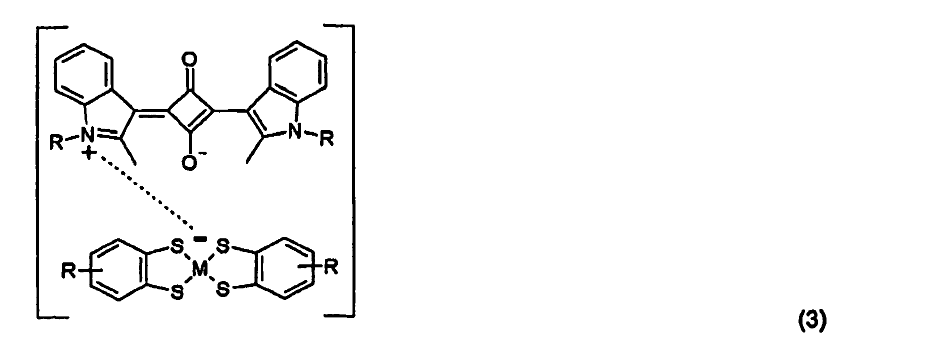 dans lesquelles :
dans la Formule Chimique 1,
chacun des R₁ à R₈ est, indépendamment, un atome d'hydrogène, un atome d'halogène, un groupe alkyle en C₁-C₁₆ substitué ou non substitué, ou un groupe alcoxy en C₁-C₁₆, un groupe phényle substitué ou non substitué, un groupe allyloxy substitué ou non substitué, un groupe alcoxy substitué par du fluor, ou un cycle pentagonal ayant au moins un atome d'azote substitué ou non substitué, et M est un atome d'hydrogène, un atome d'oxygène, un atome d'halogène, ou un atome de métal divalent à tétravalent de coordination ; et,
dans les Formules Chimiques 2 et 3,
chacun des R est, indépendamment, un atome d'hydrogène, un hydrocarbure aliphatique substitué ou non substitué ayant 1 à 30 atomes de carbone, un groupe alcoxy ayant 1 à 8 atomes de carbone, ou un groupe aryle ayant 6 à 30 atomes de carbone, et chacun de X et Y est, indépendamment, un atome d'halogène, un groupe nitro, un groupe carboxyle, un groupe alcoxy ayant 2 à 8 atomes de carbone, un groupe phénoxycarbonyle, un groupe carboxylate, un groupe alkyle ayant 1 à 8 atomes de carbone, un groupe alcoxy ayant 1 à 8 atomes de carbone, ou un groupe aryle ayant 6 à 30 atomes de carbone.

9. Film adhésif multifonctionnel de la revendication 8, dans lequel l'adhésif à base acrylique est un copolymère d'acrylate de butyle / méthacrylate d'hydroxyéthyle ou un copolymère d'acrylate de butyle / acide acrylique.

10. Film adhésif multifonctionnel de la revendication 8, dans lequel le colorant de type neon-cut est compris entre 0,01 et 10 parties en poids pour 100 parties en poids de l'adhésif à base acrylique.

11. Film adhésif multifonctionnel de la revendication 8, qui comprend en outre 0,01 à 10 parties en poids d'un colorant arrêtant le rayon proche infrarouge pour 100 parties en poids de l'adhésif à base acrylique.

12. Film adhésif multifonctionnel de la revendication 11, dans lequel le colorant arrêtant le rayon proche infrarouge est au moins un sélectionné dans le groupe constitué par un colorant de type diimmonium représenté par la Formule Chimique 4 ci-dessous, un colorant de type phtalocyanine représenté par la Formule Chimique 5 ci-dessous, un colorant de type naphtalocyanine représenté par la Formule Chimique 6 ci-dessous, et un colorant à complexe métallique représenté par la Formule Chimique 7 ou la Formule Chimique 8 : 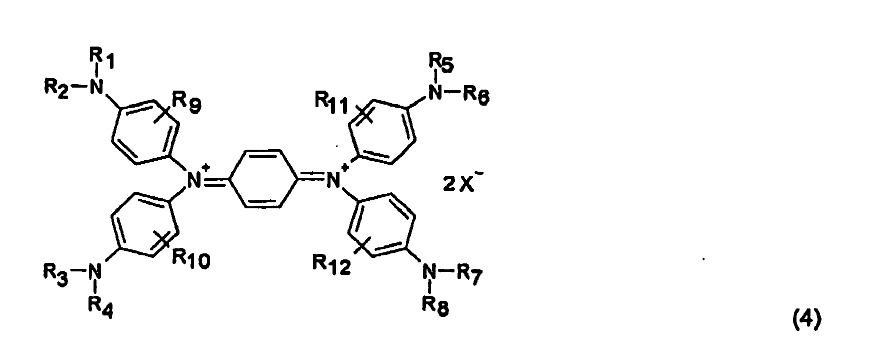 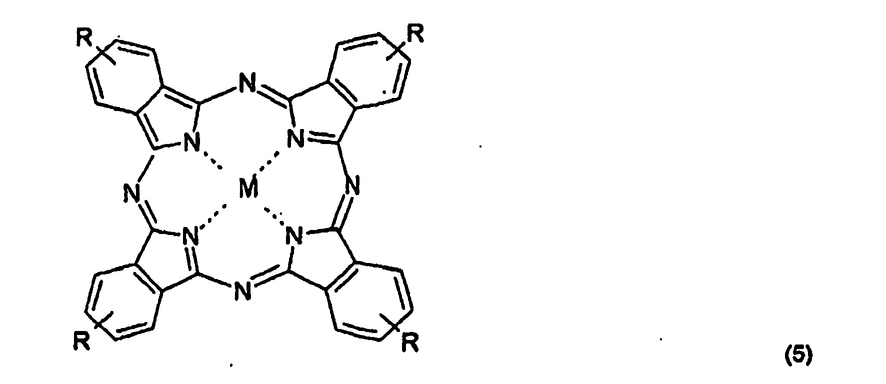 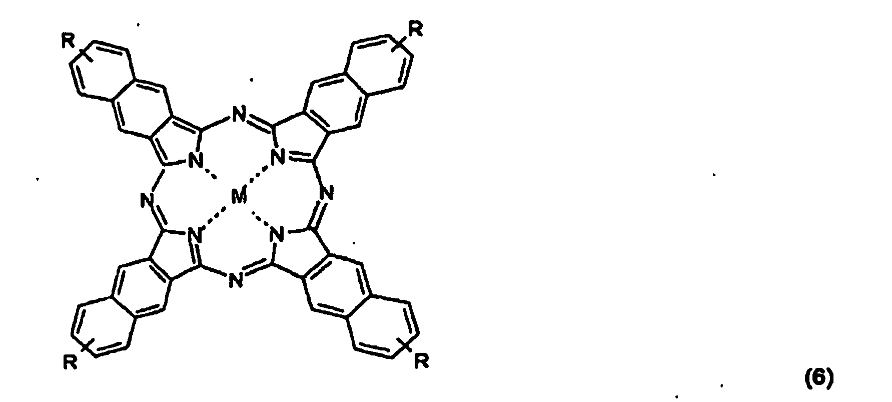 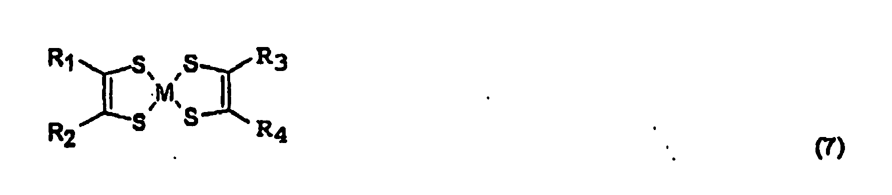 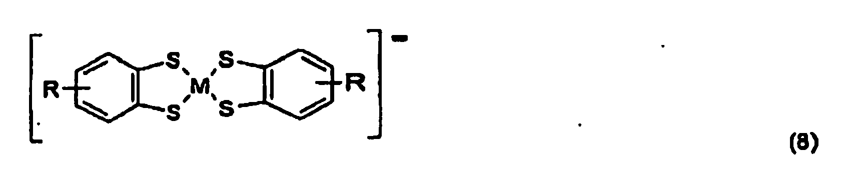 dans lesquelles :
dans la Formule Chimique 4, chacun des R₁ à R₁₂ est, indépendamment, un atome d'hydrogène, un atome d'halogène, un groupe alkyle en C₁-C₁₆ substitué ou non substitué, ou un groupe aryle en C₁-C₁₆ substitué ou non substitué, et X est un anion organique monovalent ou divalent, ou un anion inorganique monovalent ou divalent ;
dans les Formules Chimiques 5 et 6, chacun des R est, indépendamment, un atome d'hydrogène, un atome d'halogène, un groupe alkyle en C₁-C₁₆ substitué ou non substitué, un groupe phényle substitué ou non substitué, un groupe alcoxy en C₁-C₅ substitué ou non substitué, un groupe allyloxy substitué ou non substitué, un groupe alcoxy substitué par du fluor, ou un cycle pentagonal ayant au moins un atome d'azote substitué ou non substitué, et M est au moins un sélectionné dans le groupe constitué par deux atomes d'hydrogène, un atome de métal divalent, un atome de métal trivalent ou tétravalent substitué, et un atome d'oxymétal, et est de préférence Ni, Pt, Pd, ou Cru ; et
dans les Formules Chimiques 7 et 8, chacun des R et R₁ à R₄ est, indépendamment, un atome d'hydrogène, un groupe alkyle en C₁-C₁₆, un groupe aryle, un groupe alcoxy, un groupe phénoxy, un groupe hydroxy, un groupe alkylamino en C₁-C₁₆, un groupe arylamino, un groupe trifluorométhyle, un groupe alkylthio en C₁-C₁₆, un groupe arylthio, un groupe nitro, un groupe cyano, un atome d'halogène, un groupe phényle, ou un groupe naphtyle.

13. Film adhésif multifonctionnel de la revendication 8, qui comprend en outre au moins un additif sélectionné dans le groupe constitué par 0,01 à 2 parties en poids d'un agent de réticulation et 0,01 à 2 parties en poids d'un coupleur pour 100 parties en poids de l'adhésif à base acrylique sensible à la pression.

14. Filtre de panneau d'affichage plasma comprenant un quelconque film adhésif multifonctionnel des revendications 8 à 13 sur au moins un côté d'un substrat.

15. Filtre de panneau d'affichage plasma de la revendication 14, qui comprend en outre un film antireflet (film AR), un film d'interférences électromagnétiques (film EMI), et un film à technologie de fenêtre obscure.

16. Panneau d'affichage plasma comprenant le filtre de la revendication 14.

17. Film adhésif multifonctionnel de la revendication 1, dans lequel l'adhésif à base acrylique a une température de transition vitreuse (Tg) de 0 °C ou inférieure.

18. Film adhésif multifonctionnel de la revendication 1, dans lequel l'adhésif à base acrylique est obtenu par copolymérisation de 75 à 99,89 % en poids d'un monomère ester (méth)acrylate ayant un groupe alkyle en C₁₋₁₂, 0,1 à 20 % en poids d'un monomère carboxylate α,β-insaturé et 0,01 à 5 % en poids d'un monomère polymère ayant un groupe hydroxyle.
